# EUROPEAN PATENT SPECIFICATION

(11) **EP 4 421 917 B1**
(45) Date of publication and mention of the grant of the patent: **27.05.2026**
(21) Application number: 22934341.3
(22) Date of filing: 01.04.2022
(51) Int. Cl.: H01M 4/58, H01M 4/36, H01M 4/62, H01M 4/04, H01M 4/136, H01M 4/1397, H01M 10/0525, C01B 25/45, H01M 4/02

(54) **POSITIVE ELECTRODE ACTIVE MATERIAL, PREPARATION METHOD THEREFOR AND POSITIVE ELECTRODE PLATE CONTAINING SAME, AND SECONDARY BATTERY AND ELECTRIC APPARATUS**
POSITIVELEKTRODENAKTIVMATERIAL, HERSTELLUNGSVERFAHREN DAFÜR UND POSITIVELEKTRODENPLATTE DAMIT SOWIE SEKUNDÄRBATTERIE UND ELEKTRISCHE VORRICHTUNG
MATÉRIAU ACTIF D'ÉLECTRODE POSITIVE, SON PROCÉDÉ DE PRÉPARATION ET PLAQUE D'ÉLECTRODE POSITIVE LE CONTENANT, ET BATTERIE SECONDAIRE ET APPAREIL ÉLECTRIQUE

(43) Date of publication of application: 28.08.2024
(73) Proprietor: Contemporary Amperex Technology (Hong Kong) Limited, Central, Central And Western District (HK)
(72) Inventor: YUAN, Tianci, Ningde, Fujian 352100 (CN); JIANG, Yao, Ningde, Fujian 352100 (CN); ZHANG, Xinxin, Ningde, Fujian 352100 (CN); OUYANG, Chuying, Ningde, Fujian 352100 (CN); CHEN, Shangdong, Ningde, Fujian 352100 (CN); WU, Lingjing, Ningde, Fujian 352100 (CN); KANG, Weibin, Ningde, Fujian 352100 (CN); WANG, Zhiqiang, Ningde, Fujian 352100 (CN); LIU, Shaojun, Ningde, Fujian 352100 (CN); DENG, Bin, Ningde, Fujian 352100 (CN)
(74) Representative: Gong, Jinping
(86) International application number: PCT/CN2022/084907
(87) International publication number: WO 2023/184511

(56) References cited:
- WO-A1-2018/032569
- CN-A- 101 339 994
- CN-A- 101 339 994
- CN-A- 102 842 713
- CN-A- 104 577 115
- CN-A- 106 058 225
- CN-A- 108 511 715
- CN-A- 109 301 174
- CN-A- 109 301 174
- CN-A- 114 256 448
- US-A1- 2016 190 584

## Description

### TECHNICAL FIELD

The present application belongs to the technical field of battery, in particular to a positive electrode active material as specified in any of claims 1-9 a method for the preparation thereof as specified in any of claims 10 -13 and a positive electrode plate as specified in claim 14, and a secondary battery containing the same as specified in claim 15.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources. However, lithium manganese phosphate is prone to manganese ion leaching out during charging, resulting in rapid capacity decay. Therefore, it is necessary to provide a positive electrode active material with good overall performance. US2016190584A1 mentions a li-ion battery positive electrode material. CN109301174A mentions a core-shell positive active material. CN101339994A mentions a positive active material. CN108511715A mentions a pyrophosphate to coat a cathode material. WO2018032569A1 mentions a core-shell positive active material comprising LiMn_{1-X}FeₓPO₄.

### SUMMARY

The present invention is defined by the appended claims. An object of the present application is to provide a positive electrode active material, a method for the preparation thereof, and a positive electrode plate, a secondary battery and an electrical device comprising the same, which material enables the secondary battery and electrical device using the positive electrode active material to have a relatively high energy density, and good cycling performance, rate performance and safety performance.

A first aspect of the present application provides a positive electrode active material having a core-shell structure, comprising a core and a shell covering the core, wherein:
the core has a chemical formula of LiₐAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
the shell comprises a first cladding layer covering the core, a second cladding layer covering the first cladding layer,
wherein the first cladding layer comprises pyrophosphates MP₂O₇ and phosphate XPO₄, in which each M and X are independently one or more elements selected from Li, Fe, Ni, Mg, Co, Cu, Zn, Ti, Ag, Zr, Nb and Al; and
wherein the second cladding layer comprises carbon; wherein the crystallinity of the pyrophosphate and phosphate is each independently from 10% to 100% ,wherein a weight ratio of pyrophosphate to phosphate in the first cladding layer is from 1:3 to 3:1 and, wherein the first cladding layer has a coating amount of greater than 0 and less than or equal to 7 wt.%, based on the weight of the core and the second cladding layer has a coating amount of greater than 0 and less than or equal to 6 wt.%, based on the weight of the core.

By simultaneously doping the Li, Mn, P and O sites of lithium manganese phosphate with specific elements in a specific amount and covering cladding layers on the surface thereof, the present application is able to effectively inhibit the leaching out of manganese ions during the process of deintercalation of lithium, and at the same time to promote the migration of lithium ions, so as to improve the cycling performance, the rate performance and the safety performance of the battery.

In some embodiments of the present application, the phosphate in the first cladding layer has an interplanar spacing ranging from 0.345 nm to 0.358 nm, and a crystal orientation (111) angle ranging from 24.25° to 26.45°; and the pyrophosphate in the first cladding layer has an interplanar spacing ranging from 0.293 nm to 0.326 nm, and a crystal orientation (111) angle ranging from 26.41° to 32.57°. When the interplanar spacing and the crystal direction (111) angle of the phosphate and the pyrophosphate in the first cladding layer are in the above range, the impurity phase in the cladding layer can be effectively avoided, so as to enhance the specific capacity, the cycling performance, and the rate performance of the positive electrode active material.

In some embodiments of the present application the weight ratio of the pyrophosphate and the phosphate in the first cladding layer is from 1:3 to 1:1. The suitable ratio of the pyrophosphate and the phosphate is conducive to giving full play to the synergistic effect thereof, which can effectively inhibit the leaching out of manganese ions, and also effectively reduce the content of impurity lithium on the surface, and reduce the interfacial side reaction, so as to enhance the cycling performance, rate performance and safety performance of the battery.

In some embodiments of the present application, the crystallinity of the pyrophosphate and phosphate is each independently from 50% to 100%. This is conducive to maintaining the structural stability of the first cladding layer and reducing lattice defects.

In some embodiments of the present application, x is selected from a range of 0.001 to 0.005. As a result, the kinetic performance of the positive electrode active material can be further improved.

In some embodiments of the present application, y is selected from a range of 0.01 to 0.5, optionally from 0.25 to 0.5. As a result, the specific capacity and rate performance of the positive electrode active material can be further improved.

In some embodiments of the present application, z is selected from a range of 0.001 to 0.005. As a result, the rate performance of the battery can be further improved.

In some embodiments of the present application, n is selected from a range of 0.001 to 0.005. As a result, the high-temperature stability of the battery can be further improved.

In some embodiments of the present application, (1-*y*):*y* is from 1 to 4, optionally from 1.5 to 3, and a:x is from 9 to 1100, optionally from 190 to 998. As a result, the energy density and cycling performance of the battery can be further improved.

In embodiments of the present application, the first cladding layer has a coating amount from 4 wt% to 5.6 wt%, based on the weight of the core. This enables further inhibition of manganese ion's leaching out while further facilitating transport of lithium ion.

In some embodiments of the present application, the second cladding layer has a coating amount from 3 wt% to 5 wt%, based on the weight of the core. As a result, the specific capacity of the positive electrode active material can be effectively improved. In addition, the kinetic performance and safety performance of the battery can be further improved without sacrificing the specific capacity of the positive electrode active material.

In some embodiments of the present application, each of A, C and D is independently any one element in the respective range, and B is at least two elements in its range;
optionally,
A is any one element selected from Mg and Nb; and/or
B is at least two elements selected from Fe, Ti, V, Co and Mg, optionally a combination of Fe with one or more element selected from Ti, V, Co and Mg; and/or
C is S; and/or
D is F.

As a result, it can improve rate performance, energy density and/or high-temperature stability of the battery.

In some embodiments of the present application, the positive electrode active material has a Li/Mn anti-site defect concentration of 4% or less, optionally 2% or less. As a result, it is possible to enhance the specific capacity and rate performance of the positive electrode active material.

In some embodiments of the present application, the positive electrode active material has a lattice change rate of 8% or less, optionally 6% or less. This is beneficial to enhancing transport capacity of Li⁺, which improves the rate performance of the battery.

In some embodiments of the present application, the positive electrode active material has a surface oxygen valence of -1.88 or less, optionally -1.99 to -1.88. As a result, it is possible to reduce the reactivity on the surface of the positive electrode active material, alleviate the interfacial side reaction of the positive electrode active material and the electrolyte, thereby improving the cycling performance and high-temperature storage performance and the like of the battery.

In some embodiments of the present application, the positive electrode active material has a compaction density of 2.0 g/cm³ or more, optionally 2.2 g/cm³ or more, at 3T. As a result, it is beneficial to improving the volumetric energy density of the battery.

A second aspect of the present application provides a positive electrode active material, comprising the following steps:
step of providing a core material, the core comprising LiₐAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of coating: providing an MP₂O₇ powder and an XPO₄ suspension comprising a source of carbon, respectively, adding the core material, the MP₂O₇ powder to the XPO₄ suspension comprising a source of carbon, mixing, and sintering to obtain the positive electrode active material, wherein each M and X are independently one or more elements selected Li, Fe, Ni, Mg, Co, Cu, Zn, Ti, Ag, Zr, Nb and Al;
wherein the positive electrode active material has a core-shell structure comprising the core and a shell covering the core,
wherein the shell comprises a first cladding layer covering the core, and a second cladding layer covering the first cladding layer, wherein the first cladding layer comprises pyrophosphate MP₂O₇ andphosphate XPO₄, and the second cladding layer comprises carbon; and wherein the crystallinity of the pyrophosphate and phosphate is each independently from 10% to 100%, wherein a weight ratio of pyrophosphate to phosphate in the first cladding layer is from 1:3 to 3:1 and, wherein the first cladding layer has a coating amount of greater than 0 and less than or equal to 7 wt.%, based on the weight of the core and the second cladding layer has a coating amount of greater than 0 and less than or equal to 6 wt.%, based on the weight of the core.

In any embodiment of the present application, the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₐAₓMn_{1-y}B_{y}P_{1-z}C_{z}O₄₋ₙDₙ.

In some embodiments of the present application, the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D.

In some embodiments of the present application, the stirring in the step (1) is carried out at a temperature in a range of 60-120°C.

In some embodiments of the present application, the stirring in the step (1) is carried out by stirring at a rate of 200-800 rpm.

In some embodiments of the present application, grinding the mixing in the step (2) are carried out for 8-15 hours.

By controlling the reaction temperature, stirring speed and mixing time during doping, uniform distribution of doped elements and higher crystallinity of the material after sintering can be achieved, and thus the specific capacity and rate performance of the positive electrode active material can be improved.

In some embodiments of the present application, the sintering in the step (4) is carried out at a temperature in a range of 600-900°C for 6-14 hours. Thus, it is possible to control crystallinity of the positive electrode active material and reduce the amount of leaching out of Mn and Mn-site doping elements after cycling, thereby improving high-temperature stability and cycling performance of the battery.

In some embodiments of the present application, the MP₂O₇ powder is prepared by the following steps: adding a source of elemental M and a source of phosphorus to a solvent to obtain a mixture, adjusting the pH of the mixture to 4-6, stirring and reacting sufficiently, and then drying and sintering, wherein M is selected from one or more of Li, Fe, Ni, Mg, Co, Cu, Zn, Ti, Ag, Zr, Nb and Al.

In some embodiments of the present application, during the preparation of the MP₂O₇ powder, the drying is carried out at 100°C to 300°C, optionally at 150°C to 200°C for 4 to 8 hours.

In some embodiments of the present application, during the preparation of the MP₂O₇ powder, the sintering is carried out at 500°C to 800°C, optionally at 650°C to 800°C in an inert atmosphere for 4 to 10 hours.

In some embodiments of the present application, the sintering in the coating step is carried out at 500°C to 800°C for 4 to 10 hours. As a result, the specific capacity, the rate performance and the like of the positive electrode active material can be further improved by controlling the sintering temperature and time during coating.

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 10 wt% or more, based on total weight of the positive electrode film layer.

In some embodiments of the present application, the positive electrode active material is present in the positive electrode film layer in a content of 90 wt% to 99.5 wt%, based on total weight of the positive electrode film layer. When the content of the positive electrode active material is within the above range, it is conducive to fully utilizing the advantages of the positive electrode active material of the present application.

A fourth aspect of the present application provides a secondary battery comprising the positive electrode active material of the first aspect of the present application, or the positive electrode active material prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application comprise the positive electrode active material of the present application, and thus have at least the same advantages as the positive electrode active material.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of a secondary battery according to an embodiment of the present application.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.
Fig. 7 illustrates an X-ray diffraction (XRD) of the undoped LiMnPO₄ and a core of the positive electrode active material prepared in Example 2.
Fig. 8 illustrates an X-ray energy dispersive spectroscopy (EDS) of a core of the positive electrode active material prepared in Example 2.

In the drawings, the accompanying drawings are not necessarily drawn to an actual scale. Among them, the reference sings in the drawings are illustrated as follows: 1 - battery pack, 2 - upper case body, 3 - lower case body, 4 - battery module, 5 - secondary battery, 51 - housing, 52 - electrode assembly, and 53- cover plate.

### DETAILED DESCRIPTION

Hereinafter, embodiments of the positive electrode active material, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

As used herein, the term "cladding layer" refers to a layer of material covering the core, and the layer of material may completely or partially covering the core. Use of the term "cladding layer" is used only for convenience of description and is not intended to limit the present invention. Alternatively, each cladding layer may be fully or partially covering the core.

As used herein, the term "source" refers to a compound that is a source of an element, and as examples, the types of the "source" include, but are not limited to, carbonates, sulfates, nitrates, monomers, halides, oxides and hydroxides.

As used herein, an "about" value indicates a range of that the specified value ± 10%.

The inventors of the present application found in the actual operation that manganese ion's leaching out is serious during the deep charging and discharging of the lithium manganese phosphate positive electrode active material. Although the prior art have attempted to coat lithium manganese phosphate with lithium iron phosphate to reduce interfacial side reactions, such cladding cannot prevent the migration of the leached manganese ions into the electrolyte. The leached manganese ions are reduced to manganese metal after migration to the negative electrode. The produced metal manganese is equivalent to "catalyst", which can catalyze the decomposition of the SEI (solid electrolyte interphase) film on the surface of the negative electrode to produce a by-product. One part of the by-product is gas, which is prone to cause the battery to expand and affect the safety performance of the battery, and the other part is deposited on the surface of the negative electrode, and blocks the channel of lithium ion in and out of the negative electrode, resulting in increased impedance of the battery and affecting the kinetic performance of the battery. In addition, in order to supplement the decomposed SEI film, the electrolyte and the active lithium ions in the battery are continuously consumed, which also has an irreversible impact on the capacity retention rate of the battery.

The inventor found after extensive research that for the lithium manganese phosphate positive electrode active material, the problems such as serious manganese ion's leaching out and high surface reactivity may be caused by the Jahn-Teller effect of Mn³⁺ and channel size change of the Li⁺ after delithiation. For this reason, the inventor obtained a positive electrode active material capable of significantly reducing manganese ion's leaching out and reducing the rate of lattice change, and thus possessing good cycling performance, rate performance, and safety performance, by modifying the lithium manganese phosphate.

### Positive electrode active material

A first aspect of the present application provides a positive electrode active material having a core-shell structure, comprising a core and a shell covering the core, wherein the core has a chemical formula of LiₐAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
the shell comprises a first cladding layer covering the core, a second cladding layer covering the first cladding layer, wherein the first cladding layer comprises pyrophosphates MP₂O₇ and phosphate XPO₄, in which each M and X are independently one or more elements selected from Li, Fe, Ni, Mg, Co, Cu, Zn, Ti, Ag, Zr, Nb and Al; and wherein the second cladding layer comprises carbon.

Unless otherwise stated, in the above chemical formula, when A represents more than two elements, the above range for the x value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of x1, x2...... and xn must also fall within such numerical range of the present application. Similarly, in the case where B, C and D are more than two elements, the limitations on numerical ranges for the stoichiometric numbers of B, C and D in the present application also have the above meaning.

The core of the positive electrode active material of the present application is obtained by doping the compound LiMnPO₄ with various elements, wherein A, B, C and D are elements for doping at the Li, Mn, P and O sites of the compound LiMnPO₄, respectively. Without wishing to be bound by theory, it is now believed that the improvement of performances of lithium manganese phosphate is related to the reduction of the lattice change rate of lithium manganese phosphate in the process of de-intercalation and intercalation of lithium ions and the reduction of surface activity. The reduction of the lattice change rate can reduce the difference in lattice constants between two phases at the grain boundary, reduce the interfacial stress, enhance the Li⁺ transport at the interface, and thus improve the rate performance of the positive electrode active material. High surface activity tends to lead to serious interfacial side reactions, which intensify gas production, electrolyte consumption and interface damage, thus affecting the cycling performance of the battery. In this application, the lattice change rate is reduced by doping at Li and Mn sites. The Mn-site doping also effectively reduces the surface activity, thus inhibiting the leaching out of manganese ion and the interfacial side reactions between the positive electrode active material and the electrolyte. The P-site doping results in a faster change rate of Mn-O bond length and reduces migration barrier of small polaron of the positive electrode active material, thus contributing to the enhancement of electronic conductivity. The O-site doping has a good effect on reducing the interfacial side reactions. The doping at the P- and O-sites also has an effect on the leaching out of manganese ion and kinetic properties of the anti-site defects.

The inventors of the present application unexpectedly found that by doping the compound LiMnPO₄ with specific elements in specific amounts at Li, Mn, P and O sites at the same time, it is allowed to obtain improved rate performance while reducing the leaching out of Mn and Mn-site doping elements, thereby obtaining improved cycling performance and/or high-temperature stability, and the specific capacity and compaction density of the positive electrode active material can also be improved. Optionally, A is one or more elements selected from Zn, Al, Na, K, Mg, Nb, Mo and W, B is one or more elements selected from Ti, V, Zr, Fe, Ni, Mg, Co, Ga, Sn, Sb, Nb and Ge, C is one or more elements selected from B (boron), S, Si and N, and D is one or more elements selected from S, F, Cl and Br.

The first cladding layer of the positive electrode active material of the present application comprises a pyrophosphate and a phosphate. Due to the high migration barrier of transition metals in pyrophosphate (>1 eV), the leaching out of transition metal ions can be effectively inhibited. In addition, the phosphate has excellent ability to conduct lithium ions and can reduce the impurity lithium content on the surface.

The second cladding layer of the positive electrode active material of the present application is a carbon-containing layer, which can effectively improve the conductivity and desolvation ability of LiMnPO₄. In addition, the "barrier" effect of the second cladding layer can further hinder the migration of manganese ions into the electrolyte and reduce the erosion of the electrolyte on the positive electrode active material.

Therefore, the present application can effectively inhibit the dissolution of manganese ions during the intercalation/deintercalation of lithium and promote the migration of lithium ions by doping the Li, Mn, P and O sites of lithium manganese phosphate with specific elements in a specific amount at the same time, and covering the surface by the cladding layer, so as to improve the cycling performance, the rate performance and the safety performance of the battery.

It should be noted that the position of the main characteristic peaks of the core of positive electrode active material according to application are basically the same as that before doping with LiMnPO₄, indicating that there is no impurity phase in the core of the doped lithium manganese phosphate positive electrode active material, and the improvement of the battery's performance is mainly caused by the elemental doping, rather than the impurity phase.

In some embodiments, each of A, C and D is independently any one element in the respective range, and B is at least two elements in its range. This enables easier and more accurate control of the composition of the core of the positive electrode active material.

Optionally, A is any one element selected from Mg and Nb.

Optionally, B is at least two elements selected from Fe, Ti, V, Co and Mg, optionally a combination of Fe with more than one element selected from Ti, V, Co and Mg.

Optionally, C is S.

Optionally, D is F.

By selecting the Li-site doping element within the above range, the lattice change rate during the de-intercalation process can be further reduced, thereby further improving the rate performance of the battery. By selecting the Mn-site doping element in the above range, the electronic conductivity can be further improved and the lattice change rate can be further reduced, thus improving the rate performance and capacity exertion of the battery. By selecting the P-site doping element in the above range, the rate performance of the battery can be further improved. By selecting the O-site doping element in the above range, the side reactions at the interface can be further reduced and the high-temperature stability of the battery can be improved.

a is selected from the range of 0.9 to 1.1, such as 0.97, 0.977, 0.984, 0.988, 0.99, 0.991, 0.992, 0.993, 0.994, 0.995, 0.996, 0.997, 0.998 and 1.01.

x is selected from the range of 0.001 to 0.1, such as 0.001 and 0.005.

y is selected from the range of 0.001 to 0.5, such as 0.001, 0.005, 0.02, 0.05, 0.1, 0.15, 0.2, 0.25, 0.3, 0.34, 0.345, 0.349, 0.35 and 0.4.

z is selected from the range of 0.001 to 0.1, such as 0.001, 0.005, 0.08 and 0.1.

n is selected from the range of 0.001 to 0.1, such as 0.001, 0.005, 0.08 and 0.1.

In some embodiments, x is selected from the range of 0.001 to 0.005.

In some embodiments, y is selected from the range of 0.01 to 0.5, optionally the range of 0.25 to 0.5.

In some embodiments, z is selected from the range of 0.001 to 0.005.

In some embodiments, n is selected from the range of 0.001 to 0.005.

The kinetic performance of the positive electrode active material can be further enhanced by selecting the x value within the above range. The specific capacity and rate performance of the positive electrode active material can be further enhanced by selecting the y value within the above range. The rate performance of the battery can be further improved by selecting the z value within the above range. The high-temperature stability of the battery can be further improved by selecting the n value within the above range.

In some embodiments of the present application, the core of the positive electrode active material satisfies the ratio of (1-y):y within the range of 1 to 4, optionally in the range of 1.5 to 3, and the ratio of a:x within the range of 9 to 1100, optionally the range of 190 to 998. Here y denotes the sum of the stoichiometric numbers of the Mn-site doping elements. The energy density and cycling performance of the battery can be further improved when the above conditions are satisfied.

In some embodiments, optionally the phosphate in the first cladding layer has an interplanar spacing ranging from 0.345 nm to 0.358 nm, and a crystal orientation (111) angle ranging from 24.25° to 26.45°.

In some embodiments, optionally the pyrophosphate in the first cladding layer has an interplanar spacing ranging from 0.293 nm to 0.326 nm, and a crystal orientation (111) angle ranging from 26.41° to 32.57°.

When the interplanar spacing and the crystal direction (111) angle of the phosphate and the pyrophosphate in the first cladding layer are in the above range, the impurity phase in the cladding layer can be effectively avoided, so as to enhance the specific capacity, the cycling performance, and the rate performance of the positive electrode active material.

In some embodiment of the present application, the weight ratio of the pyrophosphate and the phosphate in the first cladding layer is from 1:3 to 3:1, optionally from 1:3 to 1:1.

The suitable ratio of the pyrophosphate and the phosphate is conducive to giving full play to the synergistic effect thereof, which can effectively inhibit the leaching out of manganese ions, and also effectively reduce the content of impurity lithium on the surface, and reduce the interfacial side reaction, so as to enhance the cycling performance, rate performance and safety performance of the battery. In addition, it can effectively avoid the following situations: if there is too much pyrophosphate and too little phosphate, the battery impedance may increase; if there is too much phosphate and too little pyrophosphate, the effect of inhibiting the leaching out of manganese ion is not significant.

In some embodiment of the present application, the crystallinity of the pyrophosphate and phosphate is each independently from 10% to 100%, optionally from 50% to 100%.

In the first cladding layer of the lithium manganese phosphate positive electrode active material according to the present application, the pyrophosphate and phosphate having a certain degree of crystallinity are conducive to maintaining the structural stability of the first cladding layer and reducing lattice defects. This is conducive to giving full play to the role of the pyrophosphate in hindering the leaching out of manganese ions on the one hand, and on the other hand, it is also conducive to the phosphate in reducing the content of impurity lithium on the surface and lowering the valence of the oxygen on the surface, so as to reduce the interfacial side reaction between the positive electrode active material and the electrolyte, reduce the consumption of the electrolyte, and improve the cycling performance and safety performance of the battery.

It is to be noted that in the present application, the crystallinity of the pyrophosphate and the phosphate can be adjusted, for example, by adjusting the conditions of the sintering process, such as the sintering temperature, the sintering time, and the like. The crystallinity of the pyrophosphates and phosphates may be measured by methods known in the art, for example by methods such as X-ray diffraction, density methods, infrared spectroscopy, differential scanning calorimetry and nuclear magnetic resonance absorption methods.

In some embodiments, optionally, the coating amount of the first cladding layer is greater than 0 wt% and less than or equal to 7 wt%, optionally from 4 wt% to 5.6 wt%, based on the weight of the core.

When the coating amount of the first cladding layer is within the above range, it is able to further inhibit the leaching out of manganese ion while further promoting lithium-ion transport. In addition, it can effectively avoid the following situations: if the coating amount of the first cladding layer is too small, it may lead to insufficient inhibition of manganese ion's leaching out by pyrophosphate, and at the same time, the improvement of lithium-ion transport performance is not significant; if the coating amount of the first cladding layer is too large, it may lead to an excessively thick cladding layer, which will increase the impedance of the battery, and affect the kinetic performance of the battery.

Optionally, in some embodiments, the second cladding layer has a coating amount of greater than 0 wt% and less than or equal to 6 wt%, optionally from 3 wt% to 5 wt%, based on the weight of the core.

The carbon-containing layer as the second cladding layer can, on the one hand, play the function of a "barrier" to avoid direct contact between the positive electrode active material and the electrolyte, thereby reducing the erosion of the electrolyte on the positive electrode active material, and improving the safety performance of the battery at high temperatures. On the other hand, its strong electrical conductivity can reduce the internal resistance of the battery, thus improving the kinetic performance of the battery. However, since the carbon material has a low specific capacity, when the second cladding layer is used in an excessive amount, the overall specific capacity of the positive electrode active material may be reduced. Therefore, when the coating amount of the second cladding layer is in the above range, the kinetic performance and safety performance of the battery can be further improved without sacrificing the specific capacity of the positive electrode active material.

Optionally, in some embodiments, the positive electrode active material has a Li/Mn anti-site defect concentration of 4% or less, optionally 2% or less.

The term Li/Mn anti-site defect refers to interchange of Li⁺ with Mn²⁺ in terms of its site in the LiMnPO₄ lattice. The Li/Mn anti-site defect concentration refers to a percentage of Li⁺ in the positive electrode active material interchanged with Mn²⁺ relative to the total amount of Li⁺. Since the Li⁺ transport channel is a one-dimensional channel and Mn²⁺ is difficult to migrate in the Li⁺ transport channel, the Mn²⁺ of the anti-site defects will hinder the Li⁺ transport. In the positive electrode active material of the present application, the specific capacity and rate performance of the positive electrode active material can be improved by controlling the Li/Mn antisite defect concentration at a low level. The Li/Mn anti-site defect concentration in the present application may, for example, be tested according to JIS K 0131-1996.

In some embodiments, the positive electrode active material has a lattice change rate of 8% or less, optionally 6% or less.

The deintercalation and intercalation of lithium in LiMnPO₄ is a two-phase reaction. The interfacial stress of the two phases is determined by the level of the lattice change rate, and the smaller the lattice change rate is, the smaller the interfacial stress is, and the easier the Li⁺ transport is. Therefore, reducing the lattice change rate of the core will be favorable to enhance the Li⁺ transport ability, thereby improving the rate performance of the battery.

In some embodiments, optionally, the positive electrode active material has a button-battery average discharge voltage of 3.5V or more and a discharge gram capacity of 140mAh/g or more; optionally, the average discharge voltage is 3.6V or more and the discharge gram capacity is 145mAh/g or more.

Although the average discharge voltage of the undoped LiMnPO₄ is 4.0 V or more, it has a lower discharge gram capacity, usually less than 120 mAh/g, and thus the energy density of the battery is lower; adjusting the lattice rate of change by doping can result in a substantial increase in the discharge gram capacity, and there is a significant increase in the overall energy density of the battery in the presence of a slight decrease in the average discharge voltage.

In some embodiments, optionally, the positive electrode active material has a surface oxygen valence of -1.88 or less, optionally -1.99 to -1.88.

This is due to the fact that the higher the valence of oxygen in the compound is, the higher its ability to gain electron is, i.e., the higher the oxidizing property will be. In the lithium manganese phosphate positive electrode active material of the present application, by controlling the surface oxygen valence at a lower level, the reaction activity on the surface of the positive electrode active material can be reduced, and the interfacial side reaction between the positive electrode active material and the electrolyte can be reduced, thereby improving the cycling performance and the high-temperature storage performance of the battery.

In some embodiments, the positive electrode active material has a compaction density of 2.0 g/cm³ or more, optionally 2.2 g/cm³ or more, at 3T (tonne).

The higher the compaction density of the positive electrode active material is, the greater the weight of the positive electrode active material per unit volume is. Thus, increasing the compaction density is conducive to improving volumetric energy density of the battery. Compaction density can be measured according to GB/T 24533-2009.

### Preparation method

A second aspect of the present application provides a method for preparing the positive electrode active material according to the first aspect of the present application, comprising the following steps:
step of providing a core material: the core having the chemical formula of LiₐAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of coating: providing an MP₂O₇ powder and an XPO₄ suspension comprising a source of carbon, respectively, adding the core material, the MP₂O₇ powder to the XPO₄ suspension comprising a source of carbon, mixing, and sintering to obtain the positive electrode active material, wherein each M and X are independently one or more elements selected Li, Fe, Ni, Mg, Co, Cu, Zn, Ti, Ag, Zr, Nb and Al;
wherein the positive electrode active material has a core-shell structure comprising the core and a shell covering the core, wherein the shell comprises a first cladding layer covering the core, and a second cladding layer covering the first cladding layer, wherein the first cladding layer comprises pyrophosphate MP₂O₇ and phosphate XPO₄, and the second cladding layer comprises carbon.

In some embodiments, optionally, the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₐAₓMn_{1-y}B_{y}P_{1-z}C_{z}O₄₋ₙDₙ.

In some embodiments, the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D. By selecting the source of each doped element, the uniform distribution of the doped element can be improved, so as to improve the performance of the positive electrode active material.

In some embodiments, the acid is one or more selected from hydrochloric acid, sulfuric acid, nitric acid, phosphoric acid, organic acids such as oxalic acid, and the like, for example oxalic acid. In some embodiments, the acid is a diluted acid with a concentration of 60 wt% or less.

In some embodiments, the manganese source may be a manganese-containing substance known in the art that can be used to prepare lithium manganese phosphate. For example, the manganese source may be one or more selected from elemental manganese, manganese dioxide, manganese phosphate, manganese oxalate, and manganese carbonate.

In some embodiments, the lithium source may be a lithium-containing substance known in the art that can be used to prepare lithium manganese phosphate. For example, the lithium source may be one or more selected from lithium carbonate, lithium hydroxide, lithium phosphate, and lithium dihydrogen phosphate.

In some embodiments, the phosphorus source may be a phosphorus-containing substance known in the art that can be used to prepare lithium manganese phosphate. For example, the phosphorus source may be one or more selected from diammonium hydrogen phosphate, ammonium dihydrogen phosphate, ammonium phosphate and phosphoric acid.

The adding amount of the respective sources of elements A, B, C, and D depends on the target doping amount, and the ratio of the amounts of lithium, manganese, and phosphorus sources corresponds to the stoichiometric ratio.

In some embodiments, the solvents in step (1) and step (2) may each independently be solvents routinely used by those skilled in the art in the preparation of manganese salts and lithium manganese phosphate, and for example, they may each independently be selected from at least one of ethanol, water (such as deionized water), and the like.

In some embodiments, stirring in step (1) is carried out at a temperature in the range of 60-120°C. In some embodiments, stirring in step (1) is carried out at a rate of 200-800 rpm, or 300-800 rpm, or 400-800 rpm. In some embodiments, stirring in step (1) is carried out for 6-12 hours. In some embodiments, grinding and mixing in step (2) are carried out for 8-15 hours.

By controlling the reaction temperature, stirring speed and mixing time during doping, uniform distribution of doping elements and higher crystallinity of materials after sintering can be achieved, which can enhance specific capacity and rate performance of the positive electrode active material.

In some embodiments, the filter cake in step (1) may be washed prior to drying the filter cake.

In some embodiments, drying in step (1) may be performed in a manner and under a condition known to those skilled in the art. For example, the drying may be carried out at a temperature in the range of 120-300°C. Optionally, the filter cake may be ground into particles after drying, for example, into particles having a median particle size Dv₅₀ in the range of 50-200 nm.

In some embodiments, the temperature and time of spray drying in step (3) may be the temperature and time routinely used in the art for performing spray drying, e.g., 1-6 hours at 100-300°C.

In some embodiments, sintering in step (4) is carried out at a temperature in the range of 600-900°C for 6-14 hours. By controlling the sintering temperature and time, it is possible to control crystallinity of the positive electrode active material and reduce the amount of leaching out of Mn and Mn-site doping elements after cycling, thereby improving high-temperature stability and cycling performance of the battery.

In some embodiments, sintering in step (4) is carried out under a protective atmosphere, wherein the protective atmosphere may be nitrogen, inert gas, hydrogen or a mixture thereof.

In some embodiments, optionally, the MP₂O₇ powder is a commercially available product, or optionally, the MP₂O₇ powder is prepared by the following process: adding a source of elemental M and a source of phosphorus to a solvent, obtaining a mixture, adjusting the pH of the mixture to 4-6, stirring and reacting sufficiently, and then obtaining it by drying and sintering, wherein the M is one or more selected from Li, Fe, Ni, Mg, Co, Cu, Zn, Ti, Ag, Zr, Nb, and Al.

Optionally, in some embodiments, during the preparation of the MP₂O₇ powder, the drying step is carried out at 100-300°C, optionally 150-200°C for 4-8 hours.

Optionally, in some embodiments, during the preparation of the MP₂O₇ powder, the sintering step is carried out under an inert gas atmosphere for 4-10 hours at 500-800°C, optionally at 650-800°C. By controlling the sintering temperature and time during coating, the specific capacity and rate performance of the positive electrode active material can be further improved.

In some embodiments, optionally, the XPO₄ suspension comprising a source of carbon is commercially available, or optionally, the XPO₄ suspension comprising a source of carbon is prepared by the following process: mixing a source of lithium, a source of X, a source of phosphorus, and a source of carbon homogeneously in a solvent, and then heating the reaction mixture to a temperature of 60-120°C for 2-8 hours to obtain the XPO₄ suspension comprising a source of carbon. Optionally, the pH of the mixture is adjusted to 4-6 during the preparation of the XPO₄ suspension comprising the source of carbon.

Optionally, in some embodiments, the mass ratio of the core, the MP₂O₇ powder and the XPO₄ suspension comprising the source of carbon is 1:(0.001-0.05):(0.001-0.05) in the coating step.

Optionally, in some embodiments, the sintering temperature in the coating step is from 500°C to 800°C and the sintering time is 4-10 hours.

Optionally, in some embodiments, the median particle size Dv50 of the primary particles of the lithium manganese manganese phosphate positive electrode active material according to the present application with double cladding layers is 50-2000 nm.

### Positive electrode plate

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 10 wt% or more, based on the total weight of the positive electrode film layer.

The positive electrode current collector has two surfaces opposite to each other in the direction of its own thickness, and the positive electrode film layer is provided on either or both of two opposite surfaces of the positive electrode current collector.

In some embodiments, the positive electrode active material is present in the positive electrode film layer in a content of 90 wt% to 99.5 wt%, based on the total weight of the positive electrode film layer. When the content of the positive electrode active material is within the above range, it is conducive to fully utilizing the advantages of the positive electrode active material of the present application.

The positive electrode film layer does not exclude other positive electrode active material than the positive electrode active material of the first aspect of the present application or the positive electrode active material prepared by the method of the second aspect of the present application. For example, the positive electrode film may also comprise at least one of a lithium transition metal oxide and a modified compound thereof. By way of example, the other positive electrode active material may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In some embodiments, optionally the positive electrode film layer may further comprise a positive electrode conductive agent. In the present application, the type of the positive electrode conductive agent is not particularly limited. As an example, the positive electrode conductive agent comprises at least one of superconducting carbon, conductive graphite, acetylene black, carbon black, Ketjen black, carbon dots, carbon nanotubes, graphene, and carbon nanofibers.

In some embodiments, optionally the positive electrode film layer may further comprise a positive electrode binder. In the present application, the type of the positive electrode binder is not particularly limited. As an example, the positive electrode binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode current collector may be a metal foil or a composite current collector. As an example of a metal foil, an aluminum foil may be used. The composite current collector may comprise a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The positive electrode film layer is usually made by applying a positive electrode slurry to the positive electrode current collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in the secondary battery. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for the secondary battery may also be used. These negative electrode active materials can be used alone, or in combination of two or more materials.

In some embodiments, the negative electrode film layer may also optionally comprise a negative electrode conductive agent. In the present application, the type of the negative electrode conductive agent is not particularly limited and, as an example, the negative electrode conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film layer may optionally also include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer covering the surface of the negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolyte).

In some embodiments, an electrolyte is used as the electrolyte. The electrolyte includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, as an example, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolyte may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary battery using an electrolyte and some secondary battery using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a laminating process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. Materials of the soft bag can be plastic, such as at least one of polypropylene (PP), polybutylene terephthalate (PBT), and polybutylene succinate (PBS).

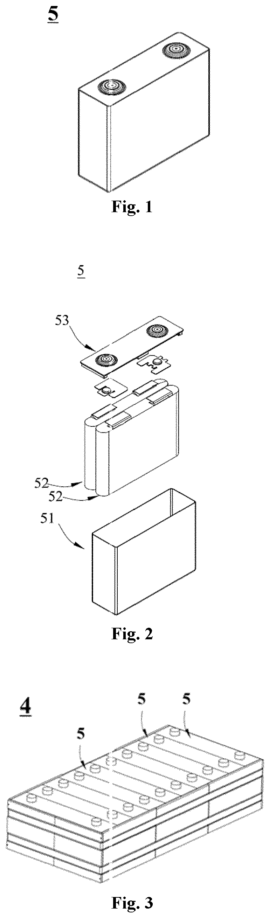

The present application does not have particular limitation to the shape of the secondary battery. The secondary battery may be cylindrical, square, or in other arbitrary shape. Fig. 1 shows a secondary battery 5 with a square structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or laminated to form an electrode assembly 52, which is encapsulated in the receiving cavity. A non-aqueous electrolyte is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and a non-aqueous electrolyte may be assembled to form a secondary battery. As an example, a positive electrode plate, a separator, and a negative electrode plate can be made into an electrode assembly by a winding process or a laminating process, and the electrode assembly can be placed in an outer package and is subjected to drying, to which an electrolyte is injected. After vacuum encapsulation, resting, chemical formation, and shaping process, a secondary battery can be obtained.

In some embodiments of the present application, the secondary battery according to the present application can be assembled into a battery module, and the number of secondary battery contained in the battery modules can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

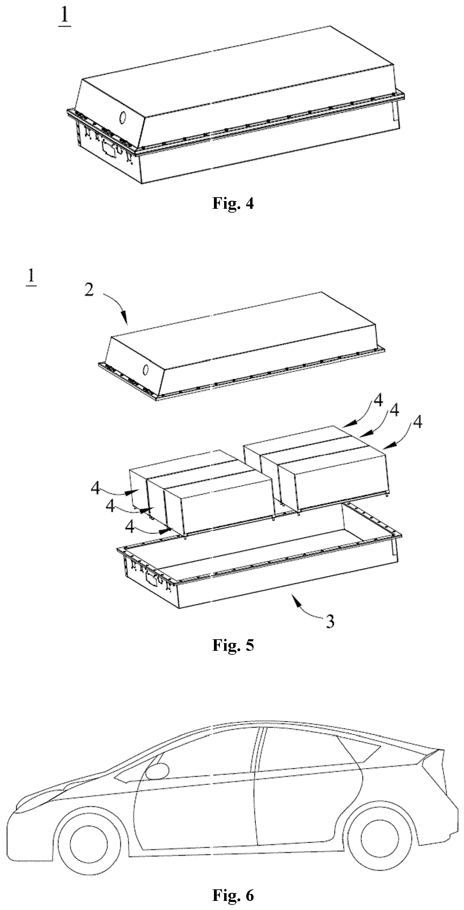

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### (1) Preparation of positive electrode active material

### S1: Preparation of doped manganese oxalate

1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

### S2: Preparation of core co-doped with lithium manganese phosphate

1 mol of the above particles of manganese oxalate, 0.497 mol of lithium carbonate, 0.001 mol of Mo(SO₄)₃, aqueous phosphoric acid solution containing 0.999 mol of phosphoric acid at a concentration of 85%, 0.001 mol of H₄SiO₄, and 0.0005 mol of NH₄HF₂ were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001}, i.e. a core of doped lithium manganese phosphate.

### S3: Preparation of lithium iron pyrophosphate powder

4.77 g of lithium carbonate, 7.47 g of ferrous carbonate, 14.84 g of ammonium dihydrogen phosphate and 1.3 g of oxalic acid dihydrate were dissolved in 50 mL of deionized water. The pH of the mixture was 5. The reaction mixture was stirred for 2 h to fully react. After reaction the solution was then warmed to 80°C and maintained at that temperature for 4 h to obtain a suspension comprising Li₂FeP₂O₇, which was filtered, washed with deionized water and dried at 120°C for 4 h to obtain a powder. The powder was sintered at 650°C under nitrogen atmosphere for 8 h and grinded after natural cooling to room temperature to obtain Li₂FeP₂O₇ powder.

### S4: Preparation of lithium iron phosphate suspension

11.1 g of lithium carbonate, 34.8 g of ferrous carbonate, 34.5 g of ammonium dihydrogen phosphate, 1.3 g of oxalic acid dihydrate, and 37.3 g of sucrose (in terms of C₁₂H₂₂O₁₁, hereinafter the same) were dissolved in 150 mL of deionized water to obtain the mixture, and then the mixture was stirred for 6 h to make the above mixture reacted fully. After reaction the solution was then warmed to 120°C and maintained at that temperature for 6 h to obtain a suspension comprising sucrose and LiFePO₄.

### S5: Cladding

10 mol (about 1570 g) of co-doped lithium manganese phosphate core obtained according to the process of step S2 and 15.7 g of Li₂FeP₂O₇ powder obtained in step S3 were added to the LiFePO₄ suspension obtained in step S4 (comprising 37.3 g of sucrose and 47.2 g of LiFePO₄), stirred to mix well and then transferred to a vacuum oven and dried at 150°C for 6 h. The resulting product was then dispersed by sand milling. After dispersing, the resulting product was sintered under a nitrogen atmosphere at 700°C for 6 h to obtain the positive electrode active material.

### (2) Preparation of positive electrode plate

The resultingpositive electrode active material, acetylene black as a conductive agent, polyvinylidene difluoride (PVDF) as a binder in a weight ratio of 92:2.5:5.5were added to N-methylpyrrolidone (NMP), stirred and mixed homogeneously to obtain a positive electrode slurry. The positive electrode slurry was then uniformly applied to an aluminum foil at 0.280g/1540.25mm², and then dried, cold pressed, and slit to obtain a positive electrode plate.

### (3) Preparation of negative electrode plate

Artificial graphite as a negative electrode active material, hard carbon, acetylene black as a conductive agent, styrene butadiene rubber (SBR) as a binder, sodium carboxymethyl cellulose (CMC) as a thickener in a weight ratio of 90:5:2:2:1 were dissolved in a solvent deionized water, which was stirred and mixed well to prepare a negative electrode slurry. The negative electrode slurry was uniformly applied to a copper foil as a current collector at 117g/1540.25mm², and then dried, cold pressed, and slit to obtain a negative electrode plate.

### (4) Preparation of electrolyte

In an argon atmosphere glove box (H₂O<0.1ppm, O₂<0.1ppm), ethylene carbonate (EC)/ethyl methyl carbonate (EMC) as organic solvent was mixed homogeneously in accordance with the volume ratio of 3/7, and 12.5 wt% (based on the weight of the organic solvent) of LiPF₆ was added to dissolve in the organic solvent mentioned above, and stirred homogeneously, to obtain the electrolyte.

### (5) Separator

A commercially available PP-PE copolymer microporous film with a thickness of 20 µm and an average pore size of 80 nm was used (from JOCO Electronic Technology Company, model 20).

### (6) Preparation of full battery

The resulting positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolyte, and encapsulated to obtain a full battery.

### (7) Preparation of button battery

The lithium manganese phosphate positive electrode active material with three cladding layers prepared as above, PVDF, and acetylene black in a weight ratio of 90:5:5 were added to NMP and stirred in a drying room to make a slurry. The above slurry was applied to an aluminum foil, dried and cold pressed to form a positive electrode plate. The coating amount was 0.2g/cm² and the compaction density was 2.0g/cm³.

Lithium sheet was used as a negative electrode, a 1 mol/L solution of LiPF₆ in a mixture of ethylene carbonate (EC), diethyl carbonate (DEC) and dimethyl carbonate (DMC) at a volume ratio of 1:1:1 was used as an electrolyte, and they were assembled together with the above prepared positive electrode plate in a button battery box to form a button battery (hereinafter also referred to as "button").

### Example 2

Example 2 was the same as Example 1, with the exception that in steps S1 and S2, the amount of FeSO₄·H₂O was adjusted to 0.68 mol, the amount of Li₂CO₃ was adjusted to 0.4885 mol, Mo(SO₄)₃ was replaced with MgSO₄, H₄SiO₄ was replaced with HNO₃, and 0.02 mol of Ti(SO₄)₂ was added in the step S1 of preparation of doped manganese oxalate.

### Example 3

Example 3 was the same as Example 1, with the exception that in steps S1 and S2, the amount of Li₂CO₃ was adjusted to 0.496 mol, Mo(SO₄)₃ was replaced with W(SO₄)₃, and H₄SiO₄ was replaced with H₂SO₄.

### Example 4

Example 4 was the same as Example 1, with the exception that in steps S1 and S2, the amount of Li₂CO₃ was adjusted to 0.4985 mol, 0.001 mol of Mo(SO₄)₃ was replaced with 0.0005 mol of Al₂(SO₄)₃, and NH₄HF₂ was replaced with NH₄HCl₂.

### Example 5

Example 5 was the same as Example 1, with the exception that in steps S1 and S2, the amount of FeSO₄·H₂O was adjusted to 0.69 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ was added in the step S1 of preparation of doped manganese oxalate.

### Example 6

Example 6 was the same as Example 1, with the exception that in steps S1 and S2, the amount of FeSO₄·H₂O was adjusted to 0.68 mol, the amount of Li₂CO₃ was adjusted to 0.4965 mol, 0.001 mol of Mo(SO₄)₃ was replaced with 0.0005 mol of Nb₂(SO₄)₅, H₄SiO₄ was replaced with H₂SO₄, and 0.01 mol of VCl₂ and 0.01 mol of MgSO₄ were added in the step S1 of preparation of doped manganese oxalate.

### Example 7

Example 7 was the same as Example 6, with the exception that in steps S1 and S2, MgSO₄ was replaced with CoSO₄.

### Example 8

Example 8 was the same as Example 6, with the exception that in steps S1 and S2, MgSO₄ was replaced with NiSO₄.

### Example 9

Example 9 was the same as Example 1, with the exception that in steps S1 and S2, the amount of FeSO₄·H₂O was adjusted to 0.698 mol, the amount of Li₂CO₃ was adjusted to 0.4955 mol, and 0.001 mol of Mo(SO₄)₃ was replaced with 0.0005 mol of Nb₂(SO₄)₅, H₄SiO₄ was replaced with H₂SO₄, NH₄HF₂ was replaced with NH₄HCl₂, and 0.002 mol of Ti(SO₄)₂ was added in the step S1 of preparation of doped manganese oxalate.

### Example 10

Example 10 was the same as Example 1, with the exception that in steps S1 and S2, the amount of FeSO₄·H₂O was adjusted to 0.68 mol, the amount of Li₂CO₃ was adjusted to 0.4975 mol, 0.001 mol of Mo(SO₄)₃ was replaced with 0.0005 mol of Nb₂(SO₄)₅, NH₄HF₂ was replaced with NH₄HBr₂, and 0.01 mol of VCl₂ and 0.01 mol of MgSO₄ were added in the step S1 of preparation of doped manganese oxalate.

### Example 11

Example 11 was the same as Example 1, with the exception that in steps S1 and S2, the amount of FeSO₄·H₂O was adjusted to 0.69 mol, the amount of Li₂CO₃ was adjusted to 0.499 mol, Mo(SO₄)₃ was replaced with MgSO₄, NH₄HF₂ was replaced with NH₄HBr₂, and 0.01 mol of VCl₂ was added in the step S1 of preparation of doped manganese oxalate.

### Example 12

Example 12 was the same as Example 1, with the exception that in steps S1 and S2, the amount of MnSO₄·H₂O was adjusted to 1.36 mol, the amount of FeSO₄·H₂O was adjusted to 0.6 mol, the amount of Li₂CO₃ was adjusted to 0.4985 mol, Mo(SO₄)₃ was replaced with MgSO₄, H₄SiO₄ was replaced with HNO₃, and 0.04 mol of VCl₂ was added in the step S1 of preparation of doped manganese oxalate.

### Example 13

Example 13 was the same as Example 12, with the exception that in steps S1 and S2, the amount of MnSO₄·H₂O was adjusted to 1.16 mol, and the amount of FeSO₄·H₂O was adjusted to 0.8 mol.

### Example 14

Example 14 was the same as Example 12, with the exception that in steps S1 and S2, the amount of MnSO₄·H₂O was adjusted to 1.3 mol, and the amount of VCl₂ was adjusted to 0.1 mol.

### Example 15

Example 15 was the same as Example 1, with the exception that in steps S1 and S2, the amount of MnSO₄·H₂O was adjusted to 1.2 mol, the amount of Li₂CO₃ was adjusted to 0.494 mol, 0.001 mol of Mo(SO₄)₃ was replaced with 0.005 mol of MgSO₄, H₄SiO₄ was replaced with H₂SO₄, and 0.1 mol of VCl₂ was added in the step S1 of preparation of doped manganese oxalate.

### Example 16

Example 16 was the same as Example 1, with the exception that in steps S1 and S2, the amount of MnSO₄·H₂O was adjusted to 1.2 mol, the amount of Li₂CO₃ was adjusted to 0.467 mol, and 0.001 mol of Mo(SO₄)₃ was replaced with 0.005 mol of MgSO₄, 0.001 mol of H₄SiO₄ was replaced with 0.005 mol of H₂SO₄, 1.175 mol of phosphoric acid with a concentration of 85% was replaced with 1.171 mol of phosphoric acid with a concentration of 85%, and 0.1 mol of VCl₂ was added in the step S1 of preparation of doped manganese oxalate.

### Example 17

Example 17 was the same as Example 1, with the exception that in steps S1 and S2, the amount of MnSO₄·H₂O was adjusted to 1.2 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ was added in the step S1 of preparation of doped manganese oxalate.

### Example 18

Example 18 was the same as Example 1, with the exception that in steps S1 and S2, the amount of FeSO₄·H₂O was adjusted to 0.5 mol, the amount of Li₂CO₃ was adjusted to 0.492 mol, 0.001 mol of Mo(SO₄)₃ was replaced with 0.005 mol of MgSO₄, H₄SiO₄ was replaced with H₂SO₄, the amount of NH₄HF₂ was adjusted to 0.0025 mol, and 0.1 mol of VCl₂ and 0.1 mol of CoSO₄ were added in the step S1 of preparation of doped manganese oxalate.

### Example 19

Example 19 was the same as Example 18, with the exception that in steps S1 and S2, the amount of FeSO₄·H₂O was adjusted to 0.4 mol, and the amount of CoSO₄ was adjusted to 0.2 mol.

### Example 20

Example 20 was the same as Example 18, with the exception that in steps S1 and S2, the amount of MnSO₄·H₂O was adjusted to 1.5 mol, the amount of FeSO₄·H₂O was adjusted to 0.1 mol, and the amount of CoSO₄ was adjusted to 0.3 mol.

### Example 21

Example 21 was the same as Example 18, with the exception that in steps S1 and S2, 0.1 mol of CoSO₄ was replaced with 0.1 mol of NiSO₄.

### Example 22

Example 22 was the same as Example 18, with the exception that in steps S1 and S2, the amount of MnSO₄·H₂O was adjusted to 1.5 mol, the amount of FeSO₄·H₂O was adjusted to 0.2 mol, and 0.1 mol of CoSO₄ was replaced with 0.2 mol of NiSO₄.

### Example 23

Example 23 was the same as Example 18, with the exception that in steps S1 and S2, the amount of MnSO₄·H₂O was adjusted to 1.4 mol, the amount of FeSO₄·H₂O was adjusted to 0.3 mol, and the amount of CoSO₄ was adjusted to 0.2 mol.

### Example 24

Example 24 was the same as Example 18, with the exception that in steps S1 and S2, the amount of MnSO₄·H₂O was adjusted to 1.2 mol, the amount of FeSO₄·H₂O was adjusted to 0.5 mol, and the amount of CoSO₄ was adjusted to 0.2 mol.

### Example 25

Example 25 was the same as Example 18, with the exception that in steps S1 and S2, the amount of MnSO₄·H₂O was adjusted to 1.0 mol, the amount of FeSO₄·H₂O was adjusted to 0.7 mol, and the amount of CoSO₄ was adjusted to 0.2 mol.

### Example 26

Example 26 was the same as Example 1, with the exception that in steps S1 and S2, the amount of MnSO₄·H₂O was adjusted to 1.4 mol, the amount of FeSO₄·H₂O was adjusted to 0.3 mol, the amount of Li₂CO₃ was adjusted to 0.4825 mol, 0.001 mol of Mo(SO₄)₃ was replaced with 0.005 mol of MgSO₄, the amount of H₄SiO₄ was adjusted to 0.1 mol, the amount of phosphoric acid was adjusted to 0.9 mol, the amount of NH₄HF₂ was adjusted to 0.04 mol, the amount of FeSO₄·H₂O was adjusted to 0.3 mol, and 0.1 mol of VCl₂ and 0.2 mol of CoSO₄ were added in the step S1 of preparation of doped manganese oxalate.

### Example 27

Example 27 was the same as Example 1, with the exception that in steps S1 and S2, the amount of MnSO₄·H₂O was adjusted to 1.4 mol, the amount of FeSO₄·H₂O was adjusted to 0.3 mol, the amount of Li₂CO₃ was adjusted to 0.485 mol, and 0.001 mol of Mo(SO₄)₃ was replaced with 0.005 mol of MgSO₄, the amount of H₄SiO₄ was adjusted to 0.08 mol, the amount of phosphoric acid was adjusted to 0.92 mol, the amount of NH₄HF₂ was adjusted to 0.05 mol, and 0.1 mol of VCl₂ and 0.2 mol of CoSO₄ were added in the step S1 of preparation of doped manganese oxalate.

### Examples 28-32

Examples 28-44 were the same as Example 1, with the exception that in steps S3 and S4, the amounts of the raw materials were adjusted according to to the coating amounts shown in Table 5 so that the amounts of Li₂FeP₂O₇/LiFePO₄ in Examples 28 to 32 were 12.6 g/37.7 g, 14.1 g/42.4 g, 18.8 g/56.5 g, 22.0/66.0 g, and 25.1 g/75.4 g, respectively.

### Examples 33-36

Examples 33-36 were the same as Example 1, with the exception that in step S4, the amounts of sucrose were adjusted to 74.6 g, 149.1 g, 186.4 g, and 223.7 g, respectively, so that the corresponding coating amounts of the carbon layer as the second cladding layer were 31.4 g, 62.9 g, 78.6 g, and 94.3 g, respectively..

### Examples 37-40

Examples 37-41 were the same as Example 1, with the exception that in steps S3 and S4, the amounts of the raw materials were adjusted according to to the coating amounts shown in Table 5 so that the amounts of Li₂FeP₂O₇/LiFePO₄ in Examples 37 to 40 were 23.6g/39.3g, 31.4g/31.4g, 39.3g/23.6g and 47.2g/15.7g, respectively.

### Example 41

Example 41 was the same as Example 1, with the exception that in step S4, the sintering temperature of powder sintering step was adjusted to 550 °C and the sintering time was adjusted to 1 hour to control the crystallinity of Li₂FeP₂O₇ to 30%, and in the step S5, the cladding sintering temperature was adjusted to 650 °C and the sintering time was adjusted to 2 hours to control the crystallinity of LiFePO₄ to 30%.

### Example 42

Example 42 was the same as Example 1, with the exception that in step S4, the sintering temperature of powder sintering step was adjusted to 550 °C and the sintering time was adjusted to 2 hours to control the crystallinity of Li₂FeP₂O₇ to 50%, and in the step S5, the coating sintering temperature was adjusted to 650 °C and the sintering time was adjusted to 3 hours to control the crystallinity of LiFePO₄ to 50%.

### Example 43

Example 43 was the same as Example 1, with the exception that in step S4, the sintering temperature of powder sintering step was adjusted to 600 °C and the sintering time was adjusted to 3 hours to control the crystallinity of Li₂FeP₂O₇ to 70%, and in the step S5, the coating sintering temperature was adjusted to 650 °C and the sintering time was adjusted to 4 hours to control the crystallinity of LiFePO₄ to 70%.

### Examples 44 to 57

Examples 44-57 were the same as Example 1, with the exception that the stirring speed and heating temperature for preparing the doped manganese oxalate in step S1, and the time of grinding and stirring in a sand mill, the sintering temperature and the sintering time for preparing the co-doped lithium manganese phosphate core in step S2 were changed, as shown in Table 8 below.

### Examples 58 to 61

Examples 58-61 were the same as Example 1, with the exception that the drying temperature and drying time for preparing lithium iron pyrophosphate powder in step S3 were adjusted to 100°C/4h, 150°C/6h, 200°C/6h and 200°C/6h, respectively, and the sintering temperature and sintering time were adjusted to 700°C/6h, 700°C/6h, 700°C/6h and 600°C/6h, respectively.

### Examples 62 to 64

Examples 62-65 were the same as Example 38, with the exception that the drying temperature and drying time for cladding in step S5 were adjusted to 150°C/6h, 150°C/6h and 150°C/6h, and the sintering temperature and sintering time were adjusted to 680°C/4h, 750°C/6h and 800°C/8h, respectively.

### Comparative Example 1

Comparative Example 1 was the same as Example 1, with the exception that the step of preparation of positive electrode active material was changed.

Preparation of manganese oxalate: 1 mol of MnSO₄·H₂O was added to a reaction kettle and 10 L of deionized water and 1 mol of oxalic acid dihydrate (as oxalic acid) were added. The reaction kettle was heated to 80°C and stirred at 600 rpm for 6 h. The reaction was terminated (no bubbles were generated) to obtain a suspension of manganese oxalate. Then the suspension was filtered and the resulting filter cake was dried at 120°C, after which it was ground to obtain particles of manganese oxalate with a median particle size Dv₅₀ of 50-200 nm.

Preparation of positive electrode active material: 1 mol of the above particles of manganese oxalate, 0.5 mol of lithium carbonate, aqueous phosphoric acid solution containing 1 mol of 85% phosphoric acid, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain LiMnPO₄ coated with carbon.

### Comparative Example 2

Comparative Example 2 was the same as Comparative Example 1, with the exception that 1 mol of MnSO₄·H₂O was replaced with 0.85 mol of MnSO₄·H₂O and 0.15 mol of FeSO₄·H₂O, and MnSO₄·H₂O and FeSO₄·H₂O were mixed thoroughly in a mixer for 6 hours and then transferred to a reaction kettle.

### Comparative Example 3

Comparative Example 3 was the same as Example 1, with the exception that the step of preparation of positive electrode active material was changed.

Preparation of manganese oxalate: 1.9 mol of MnSO₄·H₂O and 0.1 mol of ZnSO₄ were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Zn doped manganese oxalate. Then the suspension was filtered and the resulting filter cake was dried at 120°C, after which it was ground to obtain particles of Fe doped manganese oxalate with a median particle size D_{V50} of about 100 nm.

Preparation of positive electrode active material: 1 mol of the above particles of manganese oxalate, 0.495 mol of lithium carbonate, 0.005 mol of MgSO₄, aqueous phosphoric acid solution containing 1 mol of 85% phosphoric acid, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.990}Mg_{0.005}Mn_{0.95}Zn_{0.05}PO₄ coated with carbon.

### Comparative Example 4

Comparative Example 4 was the same as Example 1, with the exception that the step of preparation of positive electrode active material was changed.

Preparation of manganese oxalate: 1.2 mol of MnSO₄·H₂O and 0.8 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (when no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.45 mol of lithium carbonate, 0.005 mol of Nb₂(SO₄)₅, aqueous phosphoric acid solution containing 1 mol of 85% phosphoric acid, 0.025 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.90}Nb_{0.01}Mn_{0.6}Fe_{0.4}PO_{3.95}F_{0.05} coated with carbon.

### Comparative Example 5

Comparative Example 5 was the same as Example 1, with the exception that the step of preparation of positive electrode active material was changed.

Preparation of doped manganese oxalate: 1.4 mol of MnSO₄·H₂O and 0.6 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size D_{V50} of about 100 nm.

Preparation of positive electrode active material: 1 mol of the above particles of manganese oxalate, 0.38 mol of lithium carbonate, 0.12 mol of MgSO₄, aqueous phosphoric acid solution containing 0.999 mol of 85% phosphoric acid, 0.001 mol of H₄SiO₄, 0.0005 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.76}Mg_{0.12}Mn_{0.7}Fe_{0.3}P_{0.999}Si_{0.001}O_{3.999}F_{0.001} coated with carbon.

### Comparative Example 6

Comparative Example 6 was the same as Example 1, with the exception that the step of preparation of positive electrode active material was changed.

Preparation of manganese oxalate: 0.8 mol of MnSO₄·H₂O and 1.2 mol of ZnSO₄ were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Zndoped manganese oxalate. Then the suspension was filtered and the resulting filter cake was dried at 120°C, after which it was ground to obtain particles of Fe doped manganese oxalate with a median particle size D_{V50} of about 100 nm.

Preparation of positive electrode active material: 1 mol of the above particles of manganese oxalate, 0.499 mol of lithium carbonate, 0.001 mol of MgSO₄, aqueous phosphoric acid solution containing 0.999 mol of 85% phosphoric acid, 0.001 mol of H₄SiO₄, 0.0005mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.998}Mg_{0.001}Mn_{0.4}Zn_{0.6}P_{0.999}Si_{0.001}O_{3.999}F_{0.001} coated with carbon.

### Comparative Example 7

Comparative Example 7 was the same as Example 1, with the exception that the step of preparation of positive electrode active material was changed.

Preparation of manganese oxalate: 1.4 mol of MnSO₄·H₂O and 0.6 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction ended (when no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size D_{V50} of about 100 nm.

Preparation of positive electrode active material: 1 mol of the above particles of manganese oxalate, 0.534 mol of lithium carbonate, 0.001 mol of MgSO₄, aqueous phosphoric acid solution containing 0.88 mol of 85% phosphoric acid, 0.12 mol of H₄SiO₄, 0.025mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{1.068}Mg_{0.001}Mn_{0.7}Fe_{0.3}P_{0.88}Si_{0.12}O_{3.95}F_{0.05} coated with carbon.

### Comparative Example 8

Comparative Example 8 was the same as Example 1, with the exception that the step of preparation of positive electrode active material was changed.

Preparation of manganese oxalate: 1.2 mol of MnSO₄·H₂O and 0.8 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.474 mol of lithium carbonate, 0.001 mol of MgSO₄, aqueous phosphoric acid solution containing 0.93 mol of 85% phosphoric acid, 0.07mol of H₄SiO₄, 0.06 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.948}Mg_{0.001}Mn_{0.6}Fe_{0.4}P_{0.93}Si_{0.07}O_{3.88}F_{0.12} coated with carbon.

### Comparative Example 9

Comparative Example 9 was the same as Example 1, with the exception that the step of preparation of positive electrode active material was changed.

Preparation of manganese oxalate: 1.3 mol of MnSO₄·H₂O and 0.7 mol of FeSO₄·H₂O were mixed thoroughly in a mixer for 6 hours. The mixture was transferred to a reaction kettle and 10 L of deionized water and 2 mol of oxalic acid dihydrate (as oxalic acid) were added. The reaction kettle was heated to 80°C and stirred at 600 rpm for 6 h. The reaction was terminated (no bubbles were generated) to obtain a suspension of Fe doped manganese oxalate. Then the suspension was filtered and the resulting filter cake was dried at 120°C, after which it was ground to obtain particles of Fe doped manganese oxalate with a median particle size Dv₅₀ of about 100 nm.

Preparation of positive electrode active material: 1 mol of the above particles of manganese oxalate, 0.497 mol of lithium carbonate, 0.001 mol of Mo(SO₄)₃, aqueous phosphoric acid solution containing 0.999 mol of 85% phosphoric acid, 0.001 mol of H₄SiO₄, 0.0005 mol of NH₄HF₂, and 0.01 mol of sucrose were added to 20 L of deionized water. The mixture was transferred to a sanding mill and well ground and stirred for 10 hours to obtain a slurry. The slurry was transferred to a spray drying equipment for spray drying granulation, with a drying temperature of 250°C for 4 hours to obtain granules. The above powder was sintered at 700°C for 10 hours in a protective atmosphere of nitrogen (90 vol%) + hydrogen (10 vol%) to obtain Li_{0.994}Mo_{0.001}Mn_{0.65}Fe_{0.35}P_{0.999}Si_{0.001}O_{3.999}F_{0.001} coated with carbon.

### Comparative Example 10

Comparative Example 10 was the same as Example 1, with the exception that the steps S3 and S5 was changed and step S4 was not performed.

### S3: Preparation of lithium iron pyrophosphate powder

9.52 g of lithium carbonate, 29.9 g of ferrous carbonate, 29.6 g of ammonium dihydrogen phosphate and 32.5 g of oxalic acid dihydrate were dissolved in 50 mL of deionized water. The pH of the mixture was 5. The reaction mixture was stirred for 2 h to fully react. After reaction the solution was then warmed to 80°C and maintained at that temperature for 4 h to obtain a suspension comprising Li₂FeP₂O₇, which was filtered, washed with deionized water and dried at 120°C for 4 h to obtain a powder. The powder was sintered at 500°C under nitrogen atmosphere for 4 h and grinded after natural cooling to room temperature to obtain Li₂FeP₂O₇ powder with crystallinity of 5%.

### S5: Cladding

10 mol (about 1570 g) of co-doped lithium manganese phosphate core obtained according to the process of step S2, 62.8 g of Li₂FeP₂O₇ powder obtained in step S3 and 37.3 g of sucrose were stirred and mixed homogeneously in 500 mL of deionized water and then transferred to a vacuum oven to be dried at 150°C for 6 h. The resulting product was then dispersed by sand milling. After dispersing, the resulting product was sintered under a nitrogen atmosphere at 700°C for 6 h to obtain an amorphous lithium iron pyrophosphate/carbon-coated positive electrode active material.

### Comparative Example 11

Comparative Example 11 was the same as Example 1, with the exception that the steps S4 and S5 were changed and step S3 was not performed.

### S4: Preparation of lithium iron phosphate suspension

14.7 g of lithium carbonate, 46.1 g of ferrous carbonate, 45.8 g of ammonium dihydrogen phosphate, 50.2 g of oxalic acid dihydrate, and 37.3 g of sucrose were dissolved in 500 mL of deionized water to obtain the mixture, and then the mixture was stirred for 6 h to make the above mixture reacted fully. After reaction the solution was then warmed to 120°C and maintained at that temperature for 6 h to obtain a suspension comprising LiFePO₄.

### S5: Cladding

10 mol (about 1570 g) of co-doped lithium manganese phosphate core obtained according to the process of step S2 was added to the LiFePO₄ suspension obtained in step S4 (comprising 37.3 g of sucrose and 62.8 g of LiFePO₄), stirred and mixed well and then transferred to a vacuum oven and dried at 150°C for 6 h. The resulting product was then dispersed by sand milling. After dispersing, the resulting product was sintered under a nitrogen atmosphere at 600°C for 4 h to obtain a carbon-coated amorphous lithium iron phosphate positive electrode active material.

### Comparative Example 12

Comparative Example 12 was the same as Example 1, with the exception that the steps S3 to S5 were changed.

### S3: Preparation of lithium iron pyrophosphate powder

2.38 g of lithium carbonate, 7.5 g of ferrous carbonate, 7.4 g of ammonium dihydrogen phosphate and 8.1 g of oxalic acid dihydrate were dissolved in 50 mL of deionized water. The pH of the mixture was 5. The reaction mixture was stirred for 2 h to fully react. After reaction the solution was then warmed to 80°C and maintained at that temperature for 4 h to obtain a suspension comprising Li₂FeP₂O₇, which was filtered, washed with deionized water and dried at 120°C for 4 h to obtain a powder. The powder was sintered at 500°C under nitrogen atmosphere for 4 h and grinded after natural cooling to room temperature to obtain Li₂FeP₂O₇ powder with crystallinity of 5%.

### S4: Preparation of lithium iron phosphate suspension

11.1 g of lithium carbonate, 34.8 g of ferrous carbonate, 34.5 g of ammonium dihydrogen phosphate, 37.7 g of oxalic acid dihydrate, and 37.3 g of sucrose were dissolved in 1500 mL of deionized water to obtain the mixture, and then the mixture was stirred for 6 h to make the above mixture reacted fully. After reaction the solution was then warmed to 120°C and maintained at that temperature for 6 h to obtain a suspension comprising LiFePO₄.

### S5: Cladding

10 mol (about 1570 g) of co-doped lithium manganese phosphate core obtained according to the process of step S2 and 15.7 g of Li₂FeP₂O₇ powder obtained in step S3 were added to the LiFePO₄ suspension obtained in step S4 (comprising 37.3 g of sucrose and 47.2 g of LiFePO₄), stirred to mix well and then transferred to a vacuum oven and dried at 150°C for 6 h. The resulting product was then dispersed by sand milling. After dispersing, the resulting product was sintered under a nitrogen atmosphere at 600°C for 4 h to control the crystallinity of LiFePO₄ to be 8%, to obtain the amorphous lithium iron pyrophosphate/carbon-coated positive electrode active material.

### Performance test section

### 1. Determination of the chemical formula of the inner core and the composition of different cladding layers

The internal microstructure and surface structure of the positive electrode active material were characterized with high spatial resolution by the spherical Aberration Corrected Scanning Transmission Electron Microscope (ACSTEM). By combining with the three-dimensional reconstruction technology, the chemical formula of the positive electrode active material and the composition of the first and second cladding layers were obtained.

### 2. Measurement for initial specific capacity of button battery

The above prepared button battery was charged to 4.3V at 0.1C, then charged at a constant voltage of 4.3V until the current was less than or equal to 0.05 mA, standing for 5 minutes. Then the button battery was discharged at 0.1C to 2.0V. The discharge capacity measured at this moment was initial specific capacity, denoted as D0.

### 3. Measurement for button-battery average discharge voltage (V):

The above prepared button battery was placed at a constant temperature of 25°C, standing for 5 minutes; the button battery was charged to 2.5V at 0.1C,, standing for 5 minutes; then the button battery was charged to 4.3V at 0.1C, and charged at a constant voltage of 4.3V until the current was less than or equal to 0.05 mA, standing for 5 minutes; and then the button battery was discharged at 0.1C to 2.5V. The discharge capacity measured at this moment was initial specific capacity, denoted as D0, and the discharge energy was the initial energy, denoted as E0, and the button-battery average discharge voltage V was E0/D0.

### 4. Measurement gas expansion of full battery at 60°C

A full battery of 100% state of charge (SOC) was stored at 60°C. Before, during, and after the storage, the open circuit voltage (OCV) and AC internal impedance (IMP) of the battery were tested to monitor SOC, and the volume of the battery was measured. After every 48 hours of storage, the full battery was taken out and rested for 1 hour, and then the open circuit voltage (OCV) and internal impedance (IMP) were tested. After cooling to room temperature, the volume of the battery was measured using the drainage method. The drainage method included measuring the gravity F₁ of the battery separately with a balance that can automatically perform unit conversion with the dial data, and then placing the battery completely in deionized water (with the density of 1g/cm³), measuring the gravity F₂ of the battery at this moment wherein the buoyant force F_{b} of the battery was F₁-F₂, and then according to the Archimedes principle F_{b} = ρ× g × V, the volume of battery was calculated: V=( F₁-F₂)/(ρ×g).

From the OCV and IMP test results, it can be seen that the battery of all examples maintains a SOC of 99% or higher throughout the testing process until the end of storage.

After 30 days of storage, the volume of battery was measured, and the percentage increase in battery volume after storage compared to the previous battery volume was calculated.

### 5. Measurement for cycle performance at 45°C of full battery

Under a constant temperature environment of 45°C, a full battery was charged at 1C to 4.3V, and then charged at a constant voltage at 4.3V until the current was less than or equal to 0.05 mA. The full battery rested for 5 minutes, then discharged at 1C to 2.5V. The discharging capacity at this moment was reported as D0. The above charging-discharging cycle was repeated until the discharging capacity was reduced to 80% of D0. The number of cycles the battery had undergone at this moment was reported.

### 6. Measurement for lattice change rate

Under a constant temperature environment of 25°C, a positive electrode active material sample prepared as above described was placed in an X-ray diffractometer (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

With the preparation method of a button battery as above described, the positive electrode active material sample was prepared into a button battery. The button battery was charged at a small rate of 0.05C until the current decreased to 0.01C. Then the positive electrode plate was taken out of the button battery and soaked in DMC for 8 hours. After drying and scraping the powder, the particles with a particle size less than 500 nm were screened out. A sample was taken and its lattice constant v1 was calculated in the same way as the fresh sample was tested above. (v0-v1)/v0 ×100% representing the lattice change rate of before and after complete de-intercalation and intercalation of lithium was shown in the table.

### 7. Measurement for Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 8. Measurement for leaching out of transition metal

At 45°C, a full battery with capacity reduced to 80% was discharged to 2.0 V of cutoff voltage at a rate of 0.1 C. Then the battery was disassembled, the negative electrode plate was taken out. 30 discs of unit areas (1540.25mm²) were randomly taken on the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching out of Mn (and Fe doped at Mn site) after cycling was calculated. The testing standard was based on EPA-6010D-2014.

### 9. Measurement for surface oxygen valence

5g of the prepared positive electrode active material sample was taken and prepared into a button battery according to the preparation method of button battery described in the above Example. The button battery was charged at a low rate of 0.05C until the current decreased to 0.01C. Then the positive electrode plate was taken out the button battery and soaked in dimethyl carbonate (DMC) for 8 hours. After drying and scraping the powder, the particles with a particle size less than 500 nm were screened out. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 10. Measurement for compaction density

5g of the prepared positive electrode active material sample powders were taken and placed in a special mold for compaction (CARVER mold in the United States, model 13mm), and then the mold was placed on a compaction density instrument. 3T (tonne) of pressure was applied and the thickness of the powders under pressure was read on the equipment (the thickness after pressure relief, the area of the container used for testing being 1540.25mm²). The compaction density was calculated via ρ= m/v.

### 11. X-ray diffraction method for testing the crystallinity of pyrophosphate and phosphate:

5g of the prepared positive electrode active material powder was taked, and measured for the total scattering intensity by X-ray, which was the sum of the scattering intensity of the whole space material, and was only related to the intensity of the primary rays, the chemical structure, and the total number of electrons participating in diffraction, i.e., it was related to the mass, and had nothing to do with the ordinal state of the samples; and then the crystalline scattering and the amorphous scattering were separated from the diffractogram, and the degree of crystallinity was the ratio of the the scattering of the crystallized part to the total scattering intensity.

### 12. Interplanar spacing and angle

1g of each positive electrode active material powder made above was added into a 50mL test tube, and injected 10mL of alcohol with a mass fraction of 75% into the test tube, stirred and dispersed for 30 minutes, and then a clean disposable plastic pipette was used to take an appropriate amount of the above solution and it was added dropwise on a 300-mesh copper mesh, at this time, some of the powder was left on the mesh, and then the mesh was transferred to a TEM (Talos F200s G2) sample chamber with the sample for testing, and the original pictures of TEM test was obtained.

The original images from the above TEM test were opened in DigitalMicrograph software and Fourier transformed (automatically done by the software after clicking on the operation) to obtain the diffraction pattern, and the distance from the diffracted spot to the center of the diffraction pattern was measured to obtain the interplanar spacing, and the angle was calculated according to the Bragg equation.

Table 1 shown the composition of the positive electrode active materials of Examples 1 to 11 and Comparative Examples 1 to 12.

Table 2 shown the performance data of the positive electrode active materials, positive electrode plates, button battery or full battery of Examples 1 to 11 and Comparative Examples 1 to 12 measured in accordance with the performance test methods described above.

**Table 1**

| No. | Core | First cladding layer | Second cladding layer |
|---|---|---|---|
| Comparative Example 1 | LiMnPO₄ | - | 1% carbon |
| Comparative Example 2 | LiMn_{0.85}Fe_{0.15}PO₄ | - | 1% carbon |
| Comparative Example 3 | Li_{0.990}Mg_{0.005}Mn_{0.95}Zn_{0.05}PO₄ | - | 1% carbon |
| Comparative Example 4 | Li_{0.90}Nb_{0.01}Mn_{0.6}Fe_{0.4}PO_{3.95}F_{0.05} | - | 1% carbon |
| Comparative Example 5 | Li_{0.76}Mg_{0.12}Mn_{0.7}Fe_{0.3}P_{0.999}Si_{0.001}O_{3.999}F_{0.001} | - | 1% carbon |
| Comparative Example 6 | Li_{0.998}Mg_{0.001}Mn_{0.4}Zn_{0.6}P_{0.999}Si_{0.001}O_{3.999}F_{0.001} | - | 1% carbon |
| Comparative Example 7 | Li_{1.068}Mg_{0.001}Mn_{0.7}Fe_{0.3}P_{0.88}Si_{0.12}O_{3.95}F_{0.05} | - | 1% carbon |
| Comparative Example 8 | Li_{0.948}Mg_{0.001}Mn_{0.6}Fe_{0.4}P_{0.93}Si_{0.7}O_{3.88}F_{0.12} | - | 1% carbon |
| Comparative Example 9 | Li_{0.994}Mo_{0.001}Mn_{0.65}Fe_{0.35}P_{0.999}Si_{0.001}O_{3.999}F_{0.001} | - | 1% carbon |
| Comparative Example 10 | Li_{0.994}Mo_{0.001}Mn_{0.65}Fe_{0.35}P_{0.999}Si_{0.001}O_{3.999}F_{0.001} | 4% amorphous Li₂FeP₂O₇ | 1% carbon |
| Comparative Example 11 | Li_{0.994}Mo_{0.001}Mn_{0.65}Fe_{0.35}P_{0.999}Si_{0.001}O_{3.999}F_{0.001} | 4% amorphous LiFePO₄ | 1% carbon |
| Comparative Example 12 | Li_{0.994}Mo_{0.001}Mn_{0.65}Fe_{0.35}P_{0.999}Si_{0.001}O_{3.999}F_{0.001} | 1% amorphous Li₂FeP₂O₇/3% amorphous LiFePO4 | 1% carbon |
| Example 1 | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 1% carbon |
| Example 2 | Li_{0.977}Mg_{0.001}Mn_{0.65}Fe_{0.34}Ti_{0.01}P_{0.999}N_{0.001}O_{3.999}F_{0.001} | 1% Li₂FeP₂O₇/3% LiFePO₄ | 1% carbon |
| Example 3 | Li_{0.992}W_{0.001}Mn_{0.65}Fe_{0.35}P_{0.999}S_{0.001}O_{3.999}F_{0.001} | 1% Li₂FeP₂O₇/3% LiFePO₄ | 1% carbon |
| Example 4 | Li_{0.997}Al_{0.001}Mn_{0.65}Fe_{0.35}P_{0.999}Si_{0.001}O_{3.999}Cl_{0.001} | 1% Li₂FeP₂O₇/3% LiFePO₄ | 1% carbon |
| Example 5 | Li_{0.993}Nb_{0.001}Mn_{0.65}Fe_{0.345}V_{0.005}P_{0.999}S_{0.001}O_{3.999}F_{0.001} | 1% Li₂FeP₂O₇/3% LiFePO₄ | 1% carbon |
| Example 6 | Li_{0.993}Nb_{0.001}Mn_{0.65}Fe_{0.34}V_{0.005}Mg_{0.005}P_{0.999}S_{0.001}O_{3.999}F_{0.001} | 1% Li₂FeP₂O₇/3% LiFePO₄ | 1% carbon |
| Example 7 | Li_{0.993}Nb_{0.001}Mn_{0.65}Fe_{0.34}V_{0.005}Co_{0.005}P_{0.999}S_{0.001}O_{3.999}F_{0.001} | 1% Li₂FeP₂O₇/3% LiFePO₄ | 1% carbon |
| Example 8 | Li_{0.993}Nb_{0.001}Mn_{0.65}F_{0.34}V_{0.005}Ni_{0.005}P_{0.999}S_{0.001}O_{3.999}F_{0.001} | 1% Li₂FeP₂O₇/3% LiFePO₄ | 1% carbon |
| Example 9 | Li_{0.991}Nb_{0.001}Mn_{0.65}Fe_{0.349}Ti_{0.001}P_{0.999}S_{0.001}O_{3.999}Cl_{0.001} | 1% Li₂FeP₂O₇/3% LiFePO₄ | 1% carbon |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} | 1% Li₂FeP₂O₇/3% LiFePO₄ | 1% carbon |
| Example 11 | Li_{0.998}Mg_{0.001}Mn_{0.65}Fe_{0.345}V_{0.005}P_{0.999}Si_{0.001}O_{3.999}Br_{0.001} | 1% Li₂FeP₂O₇/3% LiFePO₄ | 1% carbon |
| Note: 1) in Example 1-11, both Li₂FeP₂O₇ and LiFePO₄ have a crystallinity of 100%; 2) in Comparative Example 10-12, Li₂FeP₂O₇ has a crystallinity of 5%, and LiFePO₄ has a crystallinity of 8%. | | | |

**Table 2**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Comparative Example 1 | 11.4 | 5.2 | -1.55 | 1.7 | 2060 | 125.6 | 4.02 | 121 | 48.6 |
| Comparative Example 2 | 10.6 | 4.3 | -1.51 | 1.87 | 1510 | 126.4 | 3.85 | 129 | 37.3 |
| Comparative Example 3 | 10.8 | 3.6 | -1.64 | 1.88 | 1028 | 134.7 | 4.05 | 134 | 31.9 |
| Comparative Example 4 | 9.7 | 2.4 | -1.71 | 1.93 | 980 | 141.3 | 3.69 | 148 | 30.8 |
| Comparative Example 5 | 5.6 | 1.8 | -1.81 | 1.98 | 873 | 110.8 | 3.75 | 387 | 21.4 |
| Comparative Example 6 | 3.7 | 1.5 | -1.8 | 2.01 | 574 | 74.3 | 3.56 | 469 | 15.8 |
| Comparative Example 7 | 7.8 | 1.5 | -1.75 | 2.05 | 447 | 139.4 | 3.75 | 396 | 18.3 |
| Comparative Example 8 | 8.4 | 1.4 | -1.79 | 2.16 | 263 | 141.7 | 3.7 | 407 | 22.7 |
| Comparative Example 9 | 6.3 | 1.2 | -1.82 | 2.21 | 192 | 156.0 | 3.72 | 552 | 8.4 |
| Comparative Example 10 | 6.3 | 1.1 | -1.90 | 2.25 | 156 | 156.2 | 3.73 | 802 | 6.7 |
| Comparative Example 11 | 6.2 | 1.1 | -1.91 | 2.26 | 164 | 156.1 | 3.74 | 860 | 6.4 |
| Comparative Example 12 | 6.2 | 1.1 | -1.90 | 2.21 | 148 | 156.2 | 3.72 | 950 | 4.2 |
| Example 1 | 6.2 | 0.7 | 1.97 | 2.23 | 83 | 157.6 | 3.75 | 1285 | 2.1 |
| Example 2 | 6.8 | 0.5 | -1.98 | 2.45 | 50 | 159.4 | 3.79 | 1553 | 1.8 |
| Example 3 | 6.4 | 0.6 | -1.97 | 2.26 | 79 | 156.3 | 3.78 | 1337 | 2.1 |
| Example 4 | 5.4 | 0.7 | -1.97 | 2.24 | 86 | 154.7 | 3.75 | 1251 | 2.2 |
| Example 5 | 5.3 | 0.4 | -1.98 | 2.43 | 46 | 157.6 | 3.79 | 1598 | 1.8 |
| Example 6 | 2.4 | 0.3 | -1.99 | 2.50 | 53 | 161.8 | 3.8 | 1474 | 1.7 |
| Example 7 | 2.2 | 0.3 | -1.99 | 2.51 | 51 | 161 | 3.8 | 1592 | 1.7 |
| Example 8 | 3.4 | 0.3 | -1.99 | 2.53 | 59 | 161.2 | 3.8 | 1449 | 1.6 |
| Example 9 | 3.6 | 0.4 | -1.98 | 2.48 | 43 | 159.3 | 3.79 | 1546 | 1.9 |
| Example 10 | 3.8 | 0.3 | -1.99 | 2.52 | 58 | 160.3 | 3.8 | 1660 | 1.6 |
| Example 11 | 3.5 | 0.4 | -1.98 | 2.46 | 49 | 159.6 | 3.79 | 1532 | 1.9 |

As can be seen from Table 2, the positive electrode active material obtained in the present application was modified by simultaneously doping the Li-site, Mn-site, P-site, and O-site of the lithium manganese phosphate with specific elements in a specific amount, as well as by coating the lithium manganese phosphate with multiple layers, and the resulting positive electrode active material achieved smaller lattice chage rate, smaller Li/Mn anti-site defect concentration, greater compaction density, surface oxygen valence closer to -2, and less leaching out of Fe and Mn after cycling, and thus the battery of the present application had better performance, e.g., having higher capacity, better high-temperature storage performance, and high-temperature cycling performance.

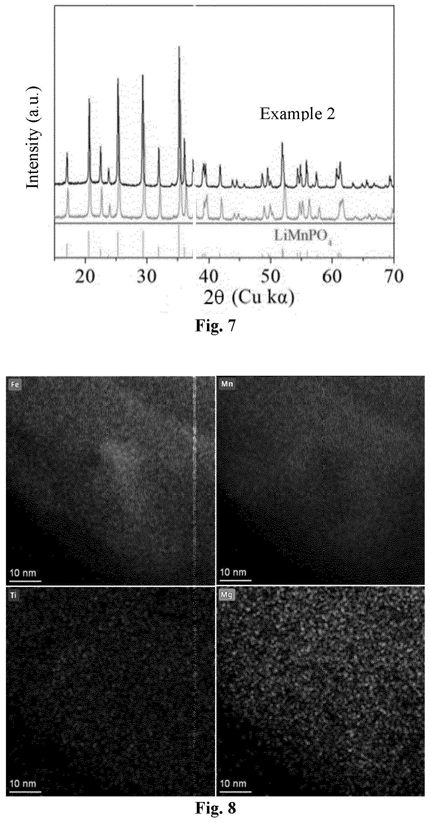

Fig. 7 shown an X-ray diffraction (XRD) of of the undoped LiMnPO₄ and the core of the positive electrode active material prepared in Example 2. It can be seen from Fig. 7 that the main characteristic peak positions in the XRD spectrum of the positive electrode active material in Example 2 were consistent with those of the undoped LiMnPO₄, indicating that no impurity phase was introduced during the doping process, and the improvement in performance was mainly caused by doping of elements rather than by impurity phase. Fig. 8 shown the X-ray energy dispersive spectrum (EDS) of the positive electrode active material prepared in Example 2. The dotted distribution in Fig. 8 represented individual doped elements. It can be seen from Fig. 8 that the element doping in the positive electrode active material in Example 2 was uniform.

Table 3 shown the composition of the positive electrode active materials of Examples 12 to 27.

Table 4 shown the performance data of the positive electrode active materials, positive electrode plates, button battery or full battery of Examples 12 to 27 measured in accordance with the performance test methods described above.

**Table 3**

| No. | Core | (1-y):y | a:x | First cladding layer | Second cladding layer |
|---|---|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.13 | 997 | 1% Li₂FeP₂O₇/ 3% LiFePO₄ | 1% carbon |
| Example 13 | Li_{0.997}Mg_{0.001}Mn_{0.58}Fe_{0.4}V_{0.02}P_{0.999}N_{0.001}O_{3.999}F_{0.001} | 1.38 | 997 | 1% Li₂FeP₂O₇/ 3% LiFePO₄ | 1% carbon |
| Example 14 | Li_{0.997}Mg_{0.001}Mn_{0.65}Fe_{0.3}V_{0.05}P_{0.999}N_{0.001}O_{3.999}F_{0.001} | 1.86 | 997 | 1% Li₂FeP₂O₇/ 3% LiFePO₄ | 1% carbon |
| Example 15 | Li_{0.988}Mg_{0.005}Mn_{0.6}Fe_{0.35}V_{0.05}P_{0.999}S_{0.001}O_{3.999}F_{0.001} | 1.50 | 197.6 | 1% Li₂FeP₂O₇/ 3% LiFePO₄ | 1% carbon |
| Example 16 | Li_{0.984}Mg_{0.005}Mn_{0.6}Fe_{0.35}V_{0.05}P_{0.995}S_{0.005}O_{3.999}F_{0.001} | 1.50 | 196.8 | 1% Li₂FeP₂O₇/ 3% LiFePO₄ | 1% carbon |
| Example 17 | Li_{0.984}Mg_{0.005}Mn_{0.6}Fe_{0.35}V_{0.05}P_{0.999}S_{0.001}O_{3.995}F_{0.005} | 1.50 | 196.8 | 1% Li₂FeP₂O₇/ 3% LiFePO₄ | 1% carbon |
| Example 18 | Li_{0.984}Mg_{0.005}Mn_{0.65}Fe_{0.25}V_{0.05}Co_{0.05}P_{0.999}S_{0.001}O_{3.995}F_{0.005} | 1.86 | 196.8 | 1% Li₂FeP₂O₇/ 3% LiFePO₄ | 1% carbon |
| Example 19 | Li_{0.984}Mg_{0.005}Mn_{0.65}Fe_{0.20}V_{0.05}Co_{0.10}P_{0.999}S_{0.001}O_{3.995}F_{0.005} | 1.86 | 196.8 | 1% Li₂FeP₂O₇/ 3% LiFePO₄ | 1% carbon |
| Example 20 | Li_{0.984}Mg_{0.005}Mn_{0.75}Fe_{0.05}V_{0.05}Co_{0.15}P_{0.999}S_{0.001}O_{3.995}F_{0.005} | 3.00 | 196.8 | 1% Li₂FeP₂O₇/ 3% LiFePO₄ | 1% carbon |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 | 1% Li₂FeP₂O₇/ 3% LiFePO₄ | 1% carbon |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 3.00 | 196.8 | 1% Li₂FeP₂O₇/ 3% LiFePO₄ | 1% carbon |
| Example 23 | Li_{0.984}Mg_{0.005}Mn_{0.7}Fe_{0.15}V_{0.05}Co_{0.10}P_{0.999}S_{0.001}O_{3.995}F_{0.005} | 2.33 | 196.8 | 1% Li₂FeP₂O₇/ 3% LiFePO₄ | 1% carbon |
| Example 24 | Li_{0.984}Mg_{0.005}Mn_{0.6}Fe_{0.25}V_{0.05}Co_{0.10}P_{0.999}S_{0.001}O_{3.995}F_{0.005} | 1.50 | 196.8 | 1% Li₂FeP₂O₇/ 3% LiFePO₄ | 1% carbon |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.00 | 196.8 | 1% Li₂FeP₂O₇/ 3% LiFePO₄ | 1% carbon |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 | 1% Li₂FeP₂O₇/ 3% LiFePO₄ | 1% carbon |
| Example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 | 1% Li₂FeP₂O₇/ 3% LiFePO₄ | 1% carbon |
| Note: 1) in Example 12-27, both Li₂FeP₂O₇ and LiFePO₄ have a crystallinity of 100% | | | | | |

**Table 4**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Example 12 | 7.0 | 0.4 | -1.97 | 2.45 | 42 | 155.6 | 3.79 | 1448 | 1.7 |
| Example 13 | 7.5 | 0.3 | -1.99 | 2.48 | 43 | 159.7 | 3.73 | 1453 | 1.8 |
| Example 14 | 7.6 | 0.5 | -1.96 | 2.47 | 47 | 157.8 | 3.78 | 1567 | 1.9 |
| Example 15 | 6.3 | 0.4 | -1.98 | 2.49 | 56 | 158.6 | 3.7 | 1438 | 1.5 |
| Example 16 | 5.4 | 0.6 | -1.95 | 2.44 | 46 | 158.4 | 3.71 | 1427 | 1.7 |
| Example 17 | 4.0 | 0.5 | -1.99 | 2.42 | 48 | 158.9 | 3.7 | 1419 | 1.6 |
| Example 18 | 2.5 | 0.3 | -1.97 | 2.46 | 44 | 159.5 | 3.75 | 1557 | 1.8 |
| Example 19 | 2.4 | 0.3 | -1.98 | 2.47 | 54 | 159.2 | 3.78 | 1564 | 1.7 |
| Example 20 | 2.5 | 0.3 | -1.96 | 2.45 | 46 | 157.3 | 3.86 | 1475 | 2.3 |
| Example 21 | 3.2 | 0.4 | -1.94 | 2.46 | 52 | 158.2 | 3.87 | 1489 | 2.1 |
| Example 22 | 3.0 | 0.4 | -1.96 | 2.46 | 55 | 159.3 | 3.85 | 1464 | 2 |
| Example 23 | 2.8 | 0.5 | -1.97 | 2.44 | 47 | 154.4 | 3.8 | 1364 | 1.9 |
| Example 24 | 2.5 | 0.4 | -1.98 | 2.45 | 45 | 154.7 | 3.72 | 1476 | 1.6 |
| Example 25 | 2.2 | 0.3 | -1.99 | 2.46 | 38 | 155.6 | 3.68 | 1486 | 2.2 |
| Example 26 | 3.3 | 0.5 | -1.96 | 2.25 | 25 | 152.5 | 3.82 | 1478 | 2 |
| Example 27 | 2.6 | 0.4 | -1.99 | 2.28 | 22 | 152.0 | 3.81 | 1437 | 1.5 |

It can seen from Table 4 that, with the same other elements, (1-y):y in the range of 1 to 4 and m:x in the range of 9 to 1100, optionally, (1-y):y in the range of 1.5 to 3 and a:x in the range of 190 to 998 can further improve the energy density and cycling performance of the battery.

Table 5 shown the composition of the positive electrode active materials of Examples 28 to 40.

Table 6 shown the performance data of the positive electrode active materials, positive electrode plates, button battery or full battery of Examples 28 to 40 measured in accordance with the performance test methods described above.

**Table 5**

| No. | Core | First cladding layer | Second cladding layer |
|---|---|---|---|
| Example 28 | Li_{0.994}Mo_{0.001}Mn_{0.65}Fe_{0.35}P_{0.999}Si_{0.001}O_{3.999}F_{0.001} | 0.8% Li₂FeP₂O₇/2.4% LiFePO₄ | 1% carbon |
| Example 29 | Li_{0.994}Mo_{0.001}Mn_{0.65}Fe_{0.35}P_{0.999}Si_{0.001}O_{3.999}F_{0.001} | 0.9% Li₂FeP₂O₇/2.7% LiFePO₄ | 1% carbon |
| Example 30 | Li_{0.994}Mo_{0.001}Mn_{0.65}Fe_{0.35}P_{0.999}Si_{0.001}O_{3.999}F_{0.001} | 1.2% Li₂FeP₂O₇/3.6% LiFePO₄ | 1% carbon |
| Example 31 | Li_{0.994}Mo_{0.001}Mn_{0.65}Fe_{0.35}P_{0.999}Si_{0.001}O_{3.999}F_{0.001} | 1.4% Li₂FeP₂O₇/4.2% LiFePO₄ | 1% carbon |
| Example 32 | Li_{0.994}Mo_{0.001}Mn_{0.65}Fe_{0.35}P_{0.999}Si_{0.001}O_{3.999}F_{0.001} | 1.6% Li₂FeP₂O₇/4.8% LiFePO₄ | 1% carbon |
| Example 33 | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 2% carbon |
| Example 34 | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 4% carbon |
| Example 35 | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 5% carbon |
| Example 36 | Li_{0.994}Mo_{0.001}Mn_{0.65}Fe_{0.35}P_{0.999}Si_{0.001}O_{3.999}F_{0.001} | 1% Li₂FeP₂O₇/3% LiFePO₄ | 6% carbon |
| Example 37 | Li_{0.994}Mo_{0.001}Mn_{0.65}Fe_{0.35}P_{0.999}Si_{0.001}O_{3.999}F_{0.001} | 1.5% Li₂FeP₂O₇/2.5% LiFePO₄ | 1% carbon |
| Example 38 | Li_{0.994}Mo_{0.001}Mn_{0.65}Fe_{0.35}P_{0.999}Si_{0.001}O_{3.999}F_{0.001} | 2% Li₂FeP₂O₇/2% LiFePO₄ | 1% carbon |
| Example 39 | Li_{0.994}Mo_{0.001}Mn_{0.65}Fe_{0.35}P_{0.999}Si_{0.001}O_{3.999}F_{0.001} | 2.5% Li₂FeP₂O₇/1.5% LiFePO₄ | 1% carbon |
| Example 40 | Li_{0.994}Mo_{0.001}Mn_{0.65}Fe_{0.35}P_{0.999}Si_{0.001}O_{3.999}F_{0.001} | 3% Li₂FeP₂O₇/1% LiFePO₄ | 1% carbon |

**Table 6**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Example 28 | 6.3 | 1.5 | -1.98 | 2.26 | 105 | 159.1 | 3.76 | 1085 | 2.6 |
| Example 29 | 6.3 | 0.8 | -1.97 | 2.25 | 89 | 158.7 | 3.74 | 1235 | 2.2 |
| Example 30 | 6.2 | 0.6 | -1.98 | 2.25 | 53 | 157.0 | 3.75 | 1329 | 1.8 |
| Example 31 | 6.2 | 0.4 | -1.97 | 2.24 | 31 | 156.4 | 3.75 | 1501 | 1.5 |
| Example 32 | 6.3 | 0.3 | -1.99 | 2.26 | 18 | 155.3 | 3.76 | 1632 | 1.1 |
| Example 33 | 6.2 | 0.5 | -1.97 | 2.18 | 65 | 156.8 | 3.77 | 1312 | 1.9 |
| Example 34 | 6.2 | 0.4 | -1.98 | 2.17 | 51 | 155.6 | 3.78 | 1341 | 1.7 |
| Example 35 | 6.1 | 0.3 | -1.99 | 2.16 | 39 | 155 | 3.79 | 1518 | 1.5 |
| Example 36 | 6.1 | 0.3 | -1.98 | 2.15 | 21 | 154.5 | 3.79 | 1649 | 1.4 |
| Example 37 | 6.2 | 0.5 | -1.99 | 2.18 | 69 | 156.8 | 3.76 | 1258 | 2.2 |
| Example 38 | 6.3 | 0.4 | -1.97 | 2.17 | 71 | 156.4 | 3.75 | 1201 | 2.3 |
| Example 39 | 6.3 | 0.5 | -1.96 | 2.16 | 65 | 155.9 | 3.75 | 1169 | 2.4 |
| Example 40 | 6.3 | 0.6 | -1.94 | 2.19 | 59 | 155.6 | 3.74 | 1131 | 2.5 |

As can be seen from Example 1 as well as Examples 28-32, as the amount of the first cladding layer was increased from 3.2% to 6.4%, the Li/Mn antisite defect concentration of the resulting positive electrode active material gradually decreased, the leaching out amount of Fe and Mn after cycling gradually decreased, and the safety and cycling performances of the corresponding battery were also improved, although the specific capacity was slightly decreased. Optionally, when the total amount of the first cladding layer was 4-5.6 wt%, the comprehensive performance of the corresponding battery was optimal.

As can be seen from t Example 1 and Examples 33 to 36, as the amount of the second cladding layer was increased from 1% to 6%, the Li/Mn antisite defect concentration of the resulting positive electrode active material material gradually decreased, the leaching out amount of Fe and Mn after cycling gradually decreased, and the safety performance and the cycling performance of the corresponding battery were further improved, but the specific capacity was slightly decreased. Optionally, when the total amount of the second cladding layer was 3-5 wt%, the comprehensive performance of the corresponding battery was optimal.

As can be seen from Example 1 and Examples 37 to 40, the improvement of the battery performance was more significant when both Li₂FeP₂O₇ and LiFePO₄ were present in the first cladding layer, and in particular when the weight ratio of Li₂FeP₂O₇ to LiFePO₄ was from 1:3 to 3:1, and in particular when the weight ratio of Li₂FeP₂O₇ to LiFePO₄ was from 1:3 to 1:1.

Table 7 shown the performance data of the positive electrode active materials, positive electrode plates, button battery or full battery of Examples 1 and 41 to 43 measured in accordance with the performance test methods described above.

**Table 7**

| No. | Crystallinity of pyrophosphate and phosphate | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|---|
| Example 1 | 100% | 6.2 | 0.7 | -1.97 | 2.23 | 83 | 157.6 | 3.75 | 1285 | 2.1 |
| Example 41 | 30% | 7.8 | 1 | -1.98 | 2.21 | 139 | 152.4 | 3.73 | 915 | 5.9 |
| Example 42 | 50% | 7.2 | 0.9 | -1.96 | 2.22 | 111 | 154.8 | 3.74 | 1002 | 4.2 |
| Example 43 | 70% | 6.8 | 0.8 | -1.97 | 2.23 | 98 | 155.9 | 3.75 | 1149 | 3 |

As can be seen from Table 7, with the gradual increase of the crystallinity of pyrophosphate and phosphate in the first cladding layer, the lattice change rate of the corresponding positive electrode active material, the Li/Mn antisite defect concentration, and the leaching out amount of Fe and Mn cycling gradually decreased, and the capacity of the battery was gradually increased, and the safety performance and the cycling performance were also gradually improved.

Examples 44 to 57 were performed under the same conditions as Example 1 except that the stirring speed and heating temperature were varied for the preparation of doped manganese oxalate in Step S1, and the time of grinding and stirring in a sand mill, the sintering temperature and the sintering time for the preparation of co-doped lithium manganese phosphate cores in Step S2, as shown in Table 8 below. Table 9 shown the performance data of the positive electrode active materials, positive electrode plates, button battery or full battery of Examples 44 to 57 measured in accordance with the performance test methods described above.

**Table 8**

| No. | Step S1 | | Step S2 | | |
|---|---|---|---|---|---|
| | Stirring speed (rpm) | Stirring temperature (°C) | Grinding time (h) | Sintering temperature (°C) | Sintering time (h) |
| Example 44 | 200 | 50 | 12 | 700 | 10 |
| Example 45 | 300 | 50 | 12 | 700 | 10 |
| Example 46 | 400 | 50 | 12 | 700 | 10 |
| Example 47 | 500 | 50 | 12 | 700 | 10 |
| Example 48 | 600 | 50 | 10 | 700 | 10 |
| Example 49 | 700 | 50 | 11 | 700 | 10 |
| Example 50 | 800 | 50 | 12 | 700 | 10 |
| Example 51 | 600 | 60 | 12 | 700 | 10 |
| Example 52 | 600 | 70 | 12 | 700 | 10 |
| Example 53 | 600 | 80 | 12 | 700 | 10 |
| Example 54 | 600 | 90 | 12 | 600 | 10 |
| Example 55 | 600 | 100 | 12 | 800 | 10 |
| Example 56 | 600 | 110 | 12 | 700 | 8 |
| Example 57 | 600 | 120 | 12 | 700 | 12 |

**Table 9**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Example 44 | 7.6 | 0.8 | -1.97 | 2.23 | 88 | 156.2 | 3.74 | 1165 | 2 |
| Example 45 | 7.2 | 0.7 | -1.98 | 2.22 | 87 | 156.8 | 3.75 | 1190 | 2.1 |
| Example 46 | 7.3 | 0.7 | -1.97 | 2.21 | 85 | 156.9 | 3.76 | 1198 | 2.2 |
| Example 47 | 7.0 | 0.7 | -1.98 | 2.22 | 84 | 157 | 3.74 | 1213 | 2.2 |
| Example 48 | 6.6 | 0.7 | -1.97 | 2.23 | 83 | 157.3 | 3.75 | 1270 | 2 |
| Example 49 | 6.7 | 0.6 | -1.99 | 2.22 | 81 | 158 | 3.76 | 1301 | 2.1 |
| Example 50 | 6.4 | 0.6 | -1.97 | 2.24 | 79 | 158.2 | 3.75 | 1268 | 2.1 |
| Example 51 | 6.3 | 0.7 | -1.98 | 2.22 | 87 | 157.6 | 3.74 | 1199 | 2 |
| Example 52 | 6.3 | 0.7 | -1.96 | 2.24 | 86 | 157.8 | 3.76 | 1245 | 2 |
| Example 53 | 6.3 | 0.6 | -1.97 | 2.21 | 82 | 157.8 | 3.75 | 1294 | 2.1 |
| Example 54 | 6.4 | 0.6 | -1.99 | 2.21 | 79 | 156.4 | 3.76 | 1287 | 2.2 |
| Example 55 | 6.7 | 0.6 | -1.98 | 2.23 | 88 | 157.1 | 3.74 | 1269 | 2 |
| Example 56 | 7.0 | 0.7 | -1.97 | 2.22 | 79 | 157.2 | 3.74 | 1248 | 2 |
| Example 57 | 7.7 | 0.8 | -1.99 | 2.21 | 84 | 157 | 3.76 | 1212 | 2.2 |

As can be seen from Table 9, the performance of the positive electrode active material as well as the battery can be further improved by adjusting the parameters such as the stirring speed and the heating temperature when preparing the doped manganese oxalate in Step S1, and the time of grinding and stirring in the sand mill, the sintering temperature and the sintering time when preparing the co-doped lithium manganese manganese phosphate xore in Step S2.

Examples 58 to 61 had the same conditions as Example 1 except that the drying temperature, drying time, sintering temperature, and sintering time when preparing the lithium iron pyrophosphate powder in Step S3 were changed, as shown in Table 10 below. Table 11 shown the performance data of the positive electrode active materials, positive electrode plates, button battery or full battery of Examples 58 to 61 measured in accordance with the performance test methods described above.

Examples 62 to 64 were subjected to the same conditions as Example 38 except that the drying temperature, drying time, sintering temperature, and sintering time were varied for the cladding of step S5, as shown in Table 12 below. Table 13 shown the performance data of the positive electrode active materials, positive electrode plates, button battery or full battery of Examples 62 to 64 measured in accordance with the performance test methods described above.

**Table 10**

| No. | Li₂FeP₂O₇: LiFePO₄ (weight ratio) | Step S3 | | | | Interplanar spacing of pyrophosphate (nm) | Angle of of pyrophosphate (°) | Interplanar spacing of phosphate (nm) | Angle of of phosphate (°) |
|---|---|---|---|---|---|---|---|---|---|
| | | Drying temperature (°C) | Drying time (h) | Sintering temperature (°C) | Sintering time (h) | | | | |
| Example 58 | 1:3 | 100 | 4 | 700 | 6 | 0.303 | 29.496 | 0.348 | 25.562 |
| Example 59 | 1:3 | 150 | 6 | 700 | 6 | 0.303 | 29.496 | 0.348 | 25.562 |
| Example 60 | 1:3 | 200 | 6 | 700 | 6 | 0.303 | 29.496 | 0.348 | 25.562 |
| Example 61 | 1:3 | 200 | 6 | 600 | 6 | 0.303 | 29.496 | 0.348 | 25.562 |

**Table 11**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Example 58 | 6.4 | 0.7 | -1.98 | 2.22 | 78 | 156.8 | 3.74 | 1205 | 1.8 |
| Example 59 | 6.2 | 0.7 | -1.97 | 2.23 | 79 | 158.1 | 3.76 | 1246 | 2 |
| Example 60 | 6.2 | 0.7 | -1.98 | 2.24 | 76 | 159.9 | 3.75 | 1278 | 2.1 |
| Example 61 | 6.3 | 1.2 | -1.96 | 2.23 | 95 | 155.1 | 3.74 | 1179 | 2.4 |

**Table 12**

| No. | Li₂FeP₂O₇ : LiFePO₄ (weight ratio) | Step S5 | | | | Interplanar spacing of pyrophosphat e (nm) | Angle of of pyrophosphat e (°) | Interplanar spacing of phosphate (nm) | Angle of of phosphate (°) |
|---|---|---|---|---|---|---|---|---|---|
| | | Drying temperatur e (°C) | Drying time (h) | Sintering temperatur e (°C) | Sintering time (h) | | | | |
| Example 62 | 1:1 | 150 | 6 | 680 | 4 | 0.303 | 29.496 | 0.348 | 25.562 |
| Example 63 | 1:1 | 150 | 6 | 750 | 6 | 0.303 | 29.496 | 0.348 | 25.562 |
| Example 64 | 1:1 | 150 | 6 | 800 | 8 | 0.303 | 29.496 | 0.348 | 25.562 |

**Table 13**

| No. | Lattice change rate (%) | Li/Mn anti-site defect concentration (%) | Surface oxygen valence | Compaction density (g/cm³) | Leaching out of Mn and Fe after cycling (ppm) | Capacity of button battery at 0.1C (mAh/g) | button-battery average discharge voltage (V)) | Number of cycles at capacity retention of 80% @45°C | Expansion rate of battery stored at 60°C for 30 days (%) |
|---|---|---|---|---|---|---|---|---|---|
| Example 62 | 6.5 | 0.8 | -1.98 | 2.22 | 92 | 155.3 | 3.76 | 1185 | 2.5 |
| Example 63 | 6.3 | 0.5 | -1.96 | 2.24 | 65 | 160.5 | 3.76 | 1305 | 2.2 |
| Example 64 | 6.2 | 0.5 | -1.97 | 2.24 | 57 | 158.7 | 3.76 | 1269 | 1.9 |

As can be seen from Tables 11 and 13, the performance of the positive electrode active material as well as the battery can be further improved by adjusting the parameters such as drying temperature, drying time, sintering temperature, sintering time, and the like in steps S3 to S5.

It should be noted that this application is not limited to the above embodiments. The above embodiments are only provided as examples, and within the technical solution of the present application, embodiments having substantially the same configuration as the technical idea and exerting the same effects are all included within the technical scope of the appended claim set.

## Claims

1. A positive electrode active material having a core-shell structure, comprising a core and a shell covering the core,
wherein the core has a chemical formula of LiₐAₓMn_{1-y}B_{y}P_{1-z}C_{z}O₄₋ₙDₙ, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
the shell comprises a first cladding layer covering the core, a second cladding layer covering the first cladding layer,
wherein the first cladding layer comprises pyrophosphates MP₂O₇ and phosphate XPO₄, in which each M and X are independently one or more elements selected from Li, Fe, Ni, Mg, Co, Cu, Zn, Ti, Ag, Zr, Nb and Al;
wherein the second cladding layer comprises carbon;
wherein the crystallinity of the pyrophosphate and phosphate are each independently from 10% to 100%, wherein a weight ratio of pyrophosphate to phosphate in the first cladding layer is from 1:3 to 3:1 and, wherein the first cladding layer has a coating amount of greater than 0 and less than or equal to 7 wt.%, based on the weight of the core and the second cladding layer has a coating amount of greater than 0 and less than or equal to 6 wt.%, based on the weight of the core.

2. The positive electrode active material according to claim 1, wherein the pyrophosphate in the first cladding layer has an interplanar spacing ranging from 0.345 nm to 0.358 nm, and a crystal orientation (111) angle ranging from 24.25° to 26.45°; and
the phosphate in the first cladding layer has an interplanar spacing ranging from 0.293 nm to 0.326 nm, and a crystal orientation (111) angle ranging from 26.41° to 32.57°;
wherein the interplanar spacing and crystal orientation (111) angle are measured as described in the description.

3. The positive electrode active material according to any one of claims 1 to 2, wherein a weight ratio of pyrophosphate to phosphate in the first cladding layer is from 1:3 to 1:1.

4. The positive electrode active material according to any one of claims 1 to 3, wherein the crystallinity of the pyrophosphate and phosphate are each independently from 50% to 100%.

5. The positive electrode active material according to any one of claims 1 to 4, wherein in the core, x is selected from a range of 0.001 to 0.005; and/or,
y is selected from a range of 0.01 to 0.5, optionally from 0.25 to 0.5; and/or,
z is selected from a range of 0.001 to 0.005; and/or,
n is selected from a range of 0.001 to 0.005.

6. The positive electrode active material according to any one of claims 1 to 5, wherein (1-*y*):*y* is from 1 to 4, optionally from 1.5 to 3, and a:x is from 9 to 1100, optionally from 190 to 998.

7. The positive electrode active material according to any one of claims 1 to 6, wherein the first cladding layer has a coating from 4 to 5.6 wt%, based on the weight of the core; and the second cladding layer has a coating amount from 3 to to 5 wt%, based on the weight of the core.

8. The positive electrode active material according to any one of claims 1 to 7, wherein each of A, C and D is independently any one element in the respective range, and B is at least two elements in its range;
optionally,
A is any one element selected from Mg and Nb, and/or
B is at least two elements selected from Fe, Ti, V, Co and Mg, optionally a combination of Fe with one or more element selected from Ti, V, Co and Mg, and/or
C is S, and/or
D is F.

9. The positive electrode active material according to any one of claims 1 to 8, wherein the positive electrode active material satisfies at least one of the following (1) to (4):
(1) the positive electrode active material has a Li/Mn anti-site defect concentration of 4% or less, optionally 2% or less, wherein the Li/Mn anti-site defect concentration is measured as described in the description;
(2) the positive electrode active material has a lattice change rate of 8% or less, optionally 6% or less, wherein the lattice change rate is measured as described in the description;
(3) the positive electrode active material has a surface oxygen valence of -1.88 or less, optionally -1.99 to -1.88, wherein the surface oxygen valence is measured as described in the description;
(4) the positive electrode active material has a compaction density of 2.0 g/cm³ or more, optionally 2.2 g/cm³, at 3T, wherein the compaction density is measured as described in the description.

10. A method for preparing a positive electrode active material, comprising the following steps:
step of providing a core material, the core comprising LiₐAₓMn_{1-y}B_{y}P_{1-z}C_{z}O₄₋ₙDₙ, in which A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, D comprises one or more elements selected from S, F, Cl and Br, a is in a range of 0.9 to 1.1, x is in a range of 0.001 to 0.1, y is in a range of 0.001 to 0.5, z is in a range of 0.001 to 0.1, n is in a range of 0.001 to 0.1, and the core is electrically neutral; and
step of coating: providing an MP₂O₇ powder and an XPO₄ suspension comprising a source of carbon, respectively, adding the core material, the MP₂O₇ powder to the XPO₄ suspension comprising a source of carbon, mixing, and sintering to obtain the positive electrode active material, wherein each M and X are independently one or more elements selected Li, Fe, Ni, Mg, Co, Cu, Zn, Ti, Ag, Zr, Nb and Al;
wherein the positive electrode active material has a core-shell structure comprising the core and a shell covering the core, wherein the shell comprises a first cladding layer covering the core, and a second cladding layer covering the first cladding layer, wherein the first cladding layer comprises pyrophosphate MP₂O₇ and phosphate XPO₄, and the second cladding layer comprises carbon
wherein the crystallinity of the pyrophosphate and phosphate are each independently from 10% to 100%, wherein a weight ratio of pyrophosphate to phosphate in the first cladding layer is from 1:3 to 3:1 and, wherein the first cladding layer has a coating amount of greater than 0 and less than or equal to 7 wt.%, based on the weight of the core and the second cladding layer has a coating amount of greater than 0 and less than or equal to 6 wt.%, based on the weight of the core.

11. The method according to claim 10, wherein the step of providing a core material comprises:
step (1), dissolving a manganese source, a source of element B and an acid in a solvent and stirring to produce a suspension of a manganese salt doped with element B, filtering the suspension and drying the resulting filter cake to obtain the manganese salt doped with element B;
step (2), adding a lithium source, a phosphorus source, a source of element A, a source of element C and a source of element D, a solvent and the manganese salt doped with element B obtained from step (1) to a reaction vessel for grinding and mixing to obtain a slurry;
step (3), transferring the slurry obtained from step (2) to a spray drying equipment for spray drying and granulating to obtain granules; and
step (4), sintering the granules obtained from step (3) to obtain a core having the chemical formula of LiₐAₓMn_{1-y}B_{y}P_{1-z}C_{z}O₄₋ₙDₙ.

12. The method according to claim 11, wherein
the source of element A is selected from at least one of elemental substance, oxides, phosphates, oxalates, carbonates and sulfates of element A, the source of element B is selected from at least one of elemental substance, oxides, phosphates, oxalates, carbonates and sulfates of element B, the source of element C is selected from at least one of sulfates, borates, nitrates and silicates of element C, and the source of element D is selected from at least one of elemental substance and ammonium salts of element D;
and/or
wherein
stirring in the step (1) is carried out at a temperature in a range of 60-120°C, and/or
stirring in the step (1) is carried out by stirring at a rate of 200-800 rpm, and/or
grinding the mixing in the step (2) are carried out for 8-15 hours, and/or
sintering in the step (4) is carried out at a temperature in a range of 600-900°C for 6-14 hours.

13. The method according to any one of claims 10 to 12, wherein the MP₂O₇ powder is prepared by the following steps: adding a source of elemental M and a source of phosphorus to a solvent to obtain a mixture, adjusting the pH of the mixture to 4-6, stirring and reacting sufficiently, and then drying and sintering, wherein M is selected from one or more of Li, Fe, Ni, Mg, Co, Cu, Zn, Ti, Ag, Zr, Nb and Al;
preferably,
wherein
the drying is carried out at 100°C to 300°C, optionally at 150°C to 200°C for 4 to 8 hours; and/or
the sintering is carried out at 500°C to 800°C, optionally at 650°C to 800°C in an inert atmosphere for 4 to 10 hours; and/or
the sintering in the coating step is carried out at 500°C to 800°C for 4 to 10 hours.

14. A positive electrode plate comprising a positive electrode current collector and a positive electrode film layer provided on at least one surface of the positive electrode current collector, wherein the positive electrode film layer comprises the positive electrode active material according to any one of claims 1 to 9 or the positive electrode active material prepared by the method according to any one of claims 10 to 13, and the positive electrode active material is present in the positive electrode film layer in a content of 10wt% or more, optionally from 90 wt% to 99.5 wt%, based on total weight of the positive electrode film layer.

15. A secondary battery (5) comprising the positive electrode active material according to any one of claims 1 to 9, or the positive electrode active material prepared by the method according to any one of claims 10 to 13, or the positive electrode plate according to claim 14.

## Patentansprüche

1. Positivelektrodenaktivmaterial mit einer Kern-Mantel-Struktur, umfassend einen Kern und einen Mantel, der den Kern bedeckt,
wobei der Kern eine chemische Formel LiₐAₓMn_{1-y}B_{y}P_{1-z}C_{z}O₄₋ₙDₙ hat, A ein oder mehrere Elemente ausgewählt aus Zn, Al, Na, K, Mg, Nb, Mo und W umfasst, B ein oder mehrere Elemente ausgewählt aus Ti, V, Zr, Fe, Ni, Mg, Co, Ga, Sn, Sb, Nb und Ge umfasst, C ein oder mehrere Elemente ausgewählt aus B (Bor), S, Si und N umfasst, D ein oder mehrere Elemente ausgewählt aus S, F, Cl und Br umfasst, a im Bereich von 0,9 bis 1,1 liegt, x im Bereich von 0,001 bis 0,1 liegt, y im Bereich von 0,001 bis 0,5 liegt, z im Bereich von 0,001 bis 0,1 liegt, n im Bereich von 0,001 bis 0,1 liegt, und der Kern elektrisch neutral ist; und
der Mantel eine erste Ummantelungsschicht, welche den Kern bedeckt, und eine zweite Ummantelungsschicht umfasst, welche die erste Ummantelungsschicht bedeckt,
wobei die erste Ummantelungsschicht Pyrophosphate MP₂O₇ und Phosphat XPO₄ umfasst, wobei jedes M und X unabhängig ein oder mehrere Elemente ausgewählt aus Li, Fe, Ni, Mg, Co, Cu, Zn, Ti, Ag, Zr, Nb und Al sind;
wobei die zweite Ummantelungsschicht Kohlenstoff umfasst;
wobei die Kristallinität des Pyrophosphats und Phosphats jeweils unabhängig 10 % bis 100 % beträgt, wobei ein Gewichtsverhältnis von Pyrophosphat zu Phosphat in der ersten Ummantelungsschicht 1:3 bis 3:1 beträgt, und wobei die erste Ummantelungsschicht eine Beschichtungsmenge größer als 0 und kleiner als oder gleich 7 Gew.-% aufweist, bezogen auf das Gewicht des Kerns, und die zweite Ummantelungsschicht eine Beschichtungsmenge größer als 0 und kleiner als oder gleich 6 Gew.-% aufweist, bezogen auf das Gewicht des Kerns.

2. Positivelektrodenaktivmaterial nach Anspruch 1, wobei das Pyrophosphat in der ersten Ummantelungsschicht einen Zwischenebenenabstand im Bereich von 0,345 nm bis 0,358 nm und einen Winkel der Kristallorientierung (111) im Bereich von 24,25° bis 26,45° hat; und
das Phosphat in der ersten Ummantelungsschicht einen Zwischenebenenabstand im Bereich von 0,293 nm bis 0,326 nm und einen Winkel der Kristallorientierung (111) im Bereich von 26,41° bis 32,57° hat;
wobei der Zwischenebenenabstand und der Winkel der Kristallorientierung (111) wie in der Beschreibung beschrieben gemessen werden.

3. Positivelektrodenaktivmaterial nach einem der Ansprüche 1 bis 2, wobei ein Gewichtsverhältnis von Pyrophosphat zu Phosphat in der ersten Ummantelungsschicht 1:3 bis 1:1 beträgt.

4. Positivelektrodenaktivmaterial nach einem der Ansprüche 1 bis 3, wobei die Kristallinität des Pyrophosphats und Phosphats jeweils unabhängig 50 % bis 100 % beträgt.

5. Positivelektrodenaktivmaterial nach einem der Ansprüche 1 bis 4, wobei in dem Kern x ausgewählt ist aus einem Bereich von 0,001 bis 0,005; und/oder
y ausgewählt ist aus einem Bereich von 0,01 bis 0,5, gegebenenfalls von 0,25 bis 0,5; und/oder
z ausgewählt ist aus einem Bereich von 0,001 bis 0,005; und/oder
n ausgewählt ist aus einem Bereich von 0,001 bis 0,005.

6. Positivelektrodenaktivmaterial nach einem der Ansprüche 1 bis 5, wobei (1-y):y 1 bis 4, gegebenenfalls 1,5 bis 3 beträgt, und a:x 9 bis 1100, gegebenenfalls 190 bis 998 beträgt.

7. Positivelektrodenaktivmaterial nach einem der Ansprüche 1 bis 6, wobei die erste Ummantelungsschicht eine Beschichtung von 4 bis 5,6 Gew.-% aufweist, bezogen auf das Gewicht des Kerns; und die zweite Ummantelungsschicht eine Beschichtungsmenge von 3 bis 5 Gew.-% aufweist, bezogen auf das Gewicht des Kerns.

8. Positivelektrodenaktivmaterial nach einem der Ansprüche 1 bis 7, wobei jedes von A, C und D unabhängig ein beliebiges Element in dem jeweiligen Bereich ist, und B mindestens zwei Elemente in seinem Bereich ist;
wobei gegebenenfalls
A ein beliebiges Element ausgewählt aus Mg und Nb ist, und/oder
B mindestens zwei Elemente ausgewählt aus Fe, Ti, V, Co und Mg ist, gegebenenfalls eine Kombination von Fe mit einem oder mehreren Elementen ausgewählt aus Ti, V, Co und Mg, und/oder
C S ist, und/oder
D F ist.

9. Positivelektrodenaktivmaterial nach einem der Ansprüche 1 bis 8, wobei das Positivelektrodenaktivmaterial mindestens eines der folgenden (1) bis (4) erfüllt:
(1) das Positivelektrodenaktivmaterial hat eine Konzentration an Li/Mn-Antistrukturdefekten von 4 % oder weniger, gegebenenfalls 2 % oder weniger, wobei die Konzentration an Li/Mn-Antistrukturdefekten wie in der Beschreibung beschrieben gemessen wird;
(2) das Positivelektrodenaktivmaterial hat eine Gitteränderungsrate von 8 % oder weniger, gegebenenfalls 6 % oder weniger, wobei die Gitteränderungsrate wie in der Beschreibung beschrieben gemessen wird;
(3) das Positivelektrodenaktivmaterial hat eine Oberflächensauerstoffwertigkeit von -1,88 oder weniger, gegebenenfalls -1,99 bis -1,88, wobei die Oberflächensauerstoffwertigkeit wie in der Beschreibung beschrieben gemessen wird;
(4) das Positivelektrodenaktivmaterial hat eine Verdichtungsdichte von 2,0 g/cm³ oder mehr, gegebenenfalls 2,2 g/cm³, bei 3 T, wobei die Verdichtungsdichte wie in der Beschreibung beschrieben gemessen wird.

10. Verfahren zur Herstellung eines Positivelektrodenaktivmaterials, umfassend die folgenden Schritte:
einen Schritt des Bereitstellens eines Kernmaterials, wobei der Kern LiₐAₓMn_{1-y}B_{y}P_{1-z}C_{z}O₄₋ₙDₙ umfasst, worin A ein oder mehrere Elemente ausgewählt aus Zn, Al, Na, K, Mg, Nb, Mo und W umfasst, B ein oder mehrere Elemente ausgewählt aus Ti, V, Zr, Fe, Ni, Mg, Co, Ga, Sn, Sb, Nb und Ge umfasst, C ein oder mehrere Elemente ausgewählt aus B (Bor), S, Si und N umfasst, D ein oder mehrere Elemente ausgewählt aus S, F, Cl und Br umfasst, a im Bereich von 0,9 bis 1,1 liegt, x im Bereich von 0,001 bis 0,1 liegt, y im Bereich von 0,001 bis 0,5 liegt, z im Bereich von 0,001 bis 0,1 liegt, n im Bereich von 0,001 bis 0,1 liegt, und der Kern elektrisch neutral ist; und
einen Schritt des Beschichtens: Bereitstellen eines Pulvers von MP₂O₇ und einer Suspension von XPO₄, umfassend eine Quelle für Kohlenstoff, Zugeben des Kernmaterials, des Pulvers von MP₂O₇ zu der Suspension von XPO₄, umfassend eine Quelle für Kohlenstoff, Mischen und Sintern, um das Positivelektrodenaktivmaterial zu erhalten, wobei jedes M und X unabhängig ein oder mehrere Elemente ausgewählt aus Li, Fe, Ni, Mg, Co, Cu, Zn, Ti, Ag, Zr, Nb und Al ist;
wobei das Positivelektrodenaktivmaterial eine Kern-Mantel-Struktur aufweist, die den Kern und einen Mantel umfasst, welcher den Kern bedeckt, wobei der Mantel eine erste Ummantelungsschicht, die den Kern bedeckt, und eine zweite Ummantelungsschicht umfasst, welche die erste Ummantelungsschicht bedeckt, wobei die erste Ummantelungsschicht Pyrophosphat MP₂O₇ und Phosphat XPO₄ umfasst, und die zweite Ummantelungsschicht Kohlenstoff umfasst,
wobei die Kristallinität des Pyrophosphats und Phosphats jeweils unabhängig 10 % bis 100 % beträgt, wobei ein Gewichtsverhältnis von Pyrophosphat zu Phosphat in der ersten Ummantelungsschicht 1:3 bis 3:1 beträgt, und wobei die erste Ummantelungsschicht eine Beschichtungsmenge größer als 0 und kleiner als oder gleich 7 Gew.-% aufweist, bezogen auf das Gewicht des Kerns, und die zweite Ummantelungsschicht eine Beschichtungsmenge größer als 0 und kleiner als oder gleich 6 Gew.-% aufweist, bezogen auf das Gewicht des Kerns.

11. Verfahren nach Anspruch 10, wobei der Schritt des Bereitstellens eines Kernmaterials umfasst:
Schritt (1): Lösen einer Manganquelle, einer Quelle für Element B und einer Säure in einem Lösungsmittel, und Rühren zum Produzieren einer Suspension eines mit Element B dotierten Mangansalzes, Filtrieren der Suspension und Trocknen des resultierenden Filterkuchens, um das mit Element B dotierte Mangansalz zu erhalten;
Schritt (2): Zugeben einer Lithiumquelle, einer Phosphorquelle, einer Quelle für Element A, einer Quelle für Element C und einer Quelle für Element D, eines Lösungsmittels und des aus Schritt (1) erhaltenen mit Element B dotierten Mangansalzes zu einem Reaktionsgefäß zum Mahlen und Mischen, um eine Aufschlämmung zu erhalten;
Schritt (3): Transferieren der aus Schritt (2) erhaltenen Aufschlämmung in eine Sprühtrocknungsanlage zum Sprühtrocknen und Granulieren, um Granulat zu erhalten; und
Schritt (4): Sintern des aus Schritt (3) erhaltenen Granulats, um einen Kern mit der chemischen Formel LiₐAₓMn_{1-y}B_{y}P_{1-z}C_{z}O₄₋ₙDₙ zu erhalten.

12. Verfahren nach Anspruch 11, wobei
die Quelle für Element A ausgewählt ist aus mindestens einem von elementarer Substanz, Oxiden, Phosphaten, Oxalaten, Carbonaten und Sulfaten von Element A, die Quelle für Element B ausgewählt ist aus mindestens einem von elementarer Substanz, Oxiden, Phosphaten, Oxalaten, Carbonaten und Sulfaten von Element B, die Quelle für Element C ausgewählt ist aus mindestens einem von Sulfaten, Boraten, Nitraten und Silikaten von Element C, und die Quelle für Element D ausgewählt ist aus mindestens einem von elementarer Substanz und Ammoniumsalzen von Element D;
und/oder wobei Rühren in dem Schritt (1) bei einer Temperatur im Bereich von 60 bis 120 °C durchgeführt wird, und/oder
Rühren in dem Schritt (1) durch Rühren mit einer Rate von 200 bis 800 UpM durchgeführt wird, und/oder
Mahlen des Mischens in dem Schritt (2) 8 bis 15 Stunden durchgeführt wird, und/oder Sintern in dem Schritt (4) bei einer Temperatur in einem Bereich von 600 bis 900 °C für 6 bis 14 Stunden durchgeführt wird.

13. Verfahren nach einem der Ansprüche 10 bis 12, wobei das Pulver von MP₂O₇ mittels der folgenden Schritte hergestellt wird: Zugeben einer Quelle für elementares M und einer Quelle für Phosphor zu einem Lösungsmittel, um eine Mischung zu erhalten, Einstellen des pH-Werts der Mischung auf 4-6, Rühren und Umsetzen in ausreichendem Maße, und dann Trocknen und Sintern, wobei M ausgewählt ist aus einem oder mehreren von Li, Fe, Ni, Mg, Co, Cu, Zn, Ti, Ag, Zr, Nb und Al;
wobei bevorzugt
das Trocknen bei 100 °C bis 300 °C, gegebenenfalls 150 °C bis 200 °C, für 4 bis 8 Stunden durchgeführt wird; und/oder
das Sintern bei 500 °C bis 800 °C, gegebenenfalls 650 °C bis 800 °C, in einer inerten Atmosphäre für 4 bis 10 Stunden durchgeführt wird; und/oder
das Sintern in dem Beschichtungsschritt bei 500 °C bis 800 °C für 4 bis 10 Stunden durchgeführt wird.

14. Positivelektrodenplatte, umfassend einen Positivelektrodenstromkollektor und eine Positivelektrodenfilmschicht, die auf mindestens einer Oberfläche des Positivelektrodenstromkollektors bereitgestellt wird, wobei die Positivelektrodenfilmschicht das Positivelektrodenaktivmaterial nach einem der Ansprüche 1 bis 9 oder das Positivelektrodenaktivmaterial umfasst, das nach dem Verfahren gemäß einem der Ansprüche 10 bis 13 hergestellt ist, und wobei das Positivelektrodenaktivmaterial in der Positivelektrodenfilmschicht in einem Gehalt von 10 Gew.-% oder mehr, gegebenenfalls 90 Gew.-% bis 99,5 Gew.-% vorhanden ist, bezogen auf das Gesamtgewicht der Positivelektrodenfilmschicht.

15. Sekundärbatterie (5), umfassend das Positivelektrodenaktivmaterial nach einem der Ansprüche 1 bis 9, oder das Positivelektrodenaktivmaterial, das nach dem Verfahren gemäß einem der Ansprüche 10 bis 13 hergestellt ist, oder die Positivelektrodenplatte nach Anspruch 14.

## Revendications

1. Matériau actif d'électrode positive ayant une structure cœur-coquille, comprenant un cœur et une coquille recouvrant le cœur,
dans lequel le cœur a pour formule chimique LiₐAₓMn_{1-y}B_{y}P_{1-z}C_{z}O₄₋ₙDₙ, A comprend un ou plusieurs éléments choisis parmi Zn, Al, Na, K, Mg, Nb, Mo et W, B comprend un ou plusieurs éléments choisis parmi Ti, V, Zr, Fe, Ni, Mg, Co, Ga, Sn, Sb, Nb et Ge, C comprend un ou plusieurs éléments choisis parmi B (bore), S, Si et N, D comprend un ou plusieurs éléments choisis parmi S, F, Cl et Br, a est compris entre 0,9 et 1,1, x est compris entre 0,001 et 0,1, y est compris entre 0,001 et 0,5, z est compris entre 0,001 et 0,1, n est compris entre 0,001 et 0,1, et le cœur est électriquement neutre ; et
la coquille comprend une première couche d'enrobage recouvrant le cœur, et une deuxième couche d'enrobage recouvrant la première couche d'enrobage,
dans lequel la première couche d'enrobage comprend un pyrophosphate MP₂O₇ et un phosphate XPO₄, dans lesquels M et X représentent chacun indépendamment un ou plusieurs éléments choisis parmi Li, Fe, Ni, Mg, Co, Cu, Zn, Ti, Ag, Zr, Nb et Al ;
dans lequel la deuxième couche d'enrobage comprend du carbone ;
dans lequel les cristallinités du pyrophosphate et du phosphate sont chacune indépendamment de 10 % à 100 %, dans lequel un rapport pondéral entre le pyrophosphate et le phosphate dans la première couche d'enrobage va de 1:3 à 3:1, et dans lequel la première couche d'enrobage présente une quantité de revêtement supérieure à 0 et inférieure ou égale à 7 % en poids, rapporté au poids du cœur, et la deuxième couche d'enrobage présente une quantité de revêtement supérieure à 0 et inférieure ou égale à 6 % en poids, rapporté au poids du cœur.

2. Matériau actif d'électrode positive selon la revendication 1, dans lequel le pyrophosphate dans la première couche d'enrobage présente une distance interréticulaire allant de 0,345 nm à 0,358 nm, et un angle d'orientation cristalline (111) allant de 24,25° à 26,45° ; et
le phosphate dans la première couche d'enrobage présente une distance interréticulaire allant de 0,293 nm à 0,326 nm, et un angle d'orientation cristalline (111) allant de 26,41° à 32,57° ;
la distance interréticulaire et l'angle d'orientation cristalline (111) étant mesurés comme décrit dans la description.

3. Matériau actif d'électrode positive selon l'une quelconque des revendications 1 et 2, dans lequel un rapport pondéral entre le pyrophosphate et le phosphate dans la première couche d'enrobage va de 1:3 à 1:1.

4. Matériau actif d'électrode positive selon l'une quelconque des revendications 1 à 3, dans lequel les cristallinités du pyrophosphate et du phosphate sont chacune indépendamment de 50 % à 100 %.

5. Matériau actif d'électrode positive selon l'une quelconque des revendications 1 à 4 dans lequel, dans le cœur, x est choisi dans une plage de 0,001 à 0,005 ; et/ou
y est choisi dans une plage de 0,01 à 0,5, éventuellement de 0,25 à 0,5 ; et/ou
z est choisi dans une plage de 0,001 à 0,005 ; et/ou
n est choisi dans une plage de 0,001 à 0,005.

6. Matériau actif d'électrode positive selon l'une quelconque des revendications 1 à 5, dans lequel le rapport (1-y)/y va de 1 à 4, éventuellement de 1,5 à 3, et le rapport a/x va de 9 à 1100, éventuellement de 190 à 998.

7. Matériau actif d'électrode positive selon l'une quelconque des revendications 1 à 6, dans lequel la première couche d'enrobage présente un revêtement allant de 4 à 5,6 % en poids, rapporté au poids du cœur ; et
la deuxième couche d'enrobage présente une quantité de revêtement allant de 3 à 5 % en poids, rapporté au poids du cœur.

8. Matériau actif d'électrode positive selon l'une quelconque des revendications 1 à 7, dans lequel A, C et D représentent chacun indépendamment n'importe quel élément dans l'ensemble respectif, et B représente au moins deux éléments dans son ensemble ;
éventuellement,
A représente n'importe quel élément choisi parmi Mg et Nb, et/ou
B représente au moins deux éléments choisis parmi Fe, Ti, V, Co et Mg, éventuellement une combinaison de Fe avec un ou plusieurs éléments choisis parmi Ti, V, Co et Mg, et/ou
C représente S, et/ou
D représente F.

9. Matériau actif d'électrode positive selon l'une quelconque des revendications 1 à 8, le matériau actif d'électrode positive satisfaisant au moins une des conditions (1) à (4) suivantes :
(1) le matériau actif d'électrode positive présente une concentration de défauts antisites Li/Mn de 4 % ou moins, éventuellement de 2 % ou moins, la concentration de défauts antisites Li/Mn étant mesurée comme décrit dans la description ;
(2) le matériau actif d'électrode positive présente un taux de variation du réseau de 8 % ou moins, éventuellement de 6 % ou moins, le taux de variation du réseau étant mesuré comme décrit dans la description ;
(3) le matériau actif d'électrode positive présente une valence de l'oxygène de surface de -1,88 ou moins, éventuellement de -1,99 à -1,88, la valence de l'oxygène de surface étant mesurée comme décrit dans la description ;
(4) le matériau actif d'électrode positive présente une masse volumique après tassement de 2,0 g/cm³ ou plus, éventuellement de 2,2 g/cm³, à 3 t, la masse volumique après tassement étant mesurée comme décrit dans la description.

10. Procédé destiné à préparer un matériau actif d'électrode positive, comprenant les étapes suivantes :
une étape d'obtention d'un matériau de cœur, le cœur comprenant du Li_{z}AₓMn_{1-y}B_{y}P₁₋₇C_{z}O₄₋ₙDₙ, dans lequel A comprend un ou plusieurs éléments choisis parmi Zn, Al, Na, K, Mg, Nb, Mo et W, B comprend un ou plusieurs éléments choisis parmi Ti, V, Zr, Fe, Ni, Mg, Co, Ga, Sn, Sb, Nb et Ge, C comprend un ou plusieurs éléments choisis parmi B (bore), S, Si et N, D comprend un ou plusieurs éléments choisis parmi S, F, Cl et Br, a est compris entre 0,9 et 1,1, x est compris entre 0,001 et 0,1, y est compris entre 0,001 et 0,5, z est compris entre 0,001 et 0,1, n est compris entre 0,001 et 0,1, et le cœur est électriquement neutre ; et
une étape de revêtement : obtention d'une poudre de MP₂O₇ et d'une suspension de XPO₄ comprenant une source de carbone, respectivement, ajout du matériau de cœur et de la poudre de MP₂O₇ à la suspension de XPO₄ comprenant une source de carbone, mélange, et frittage pour obtenir le matériau actif d'électrode positive, dans lequel M et X représentent chacun indépendamment un ou plusieurs éléments choisis parmi Li, Fe, Ni, Mg, Co, Cu, Zn, Ti, Ag, Zr, Nb et Al ;
dans lequel le matériau actif d'électrode positive a une structure cœur-coquille comprenant le cœur et une coquille recouvrant le cœur, dans lequel la coquille comprend une première couche d'enrobage recouvrant le cœur, et une deuxième couche d'enrobage recouvrant la première couche d'enrobage, dans lequel la première couche d'enrobage comprend un pyrophosphate MP₂O₇ et un phosphate XPO₄, et la deuxième couche d'enrobage comprend du carbone ;
dans lequel les cristallinités du pyrophosphate et du phosphate sont chacune indépendamment de 10 % à 100 %, dans lequel un rapport pondéral entre le pyrophosphate et le phosphate dans la première couche d'enrobage va de 1:3 à 3:1, et dans lequel la première couche d'enrobage présente une quantité de revêtement supérieure à 0 et inférieure ou égale à 7 % en poids, rapporté au poids du cœur, et la deuxième couche d'enrobage présente une quantité de revêtement supérieure à 0 et inférieure ou égale à 6 % en poids, rapporté au poids du cœur.

11. Procédé selon la revendication 10, dans lequel l'étape d'obtention d'un matériau de cœur comprend les étapes suivantes :
étape (1), dissolution d'une source de manganèse, d'une source d'élément B et d'un acide dans un solvant, et agitation pour produire une suspension d'un sel de manganèse dopé avec l'élément B, filtration de la suspension et séchage du gâteau de filtration résultant pour obtenir le sel de manganèse dopé avec l'élément B ;
étape (2), ajout d'une source de lithium, d'une source de phosphore, d'une source d'élément A, d'une source d'élément C et d'une source d'élément D, d'un solvant et du sel de manganèse dopé avec l'élément B obtenu à l'étape (1) dans une cuve de réaction en vue d'un broyage et d'un mélange pour obtenir une bouillie ;
étape (3), transfert de la bouillie obtenue à l'étape (2) à un équipement de séchage par atomisation en vue d'un séchage par atomisation et d'une granulation pour obtenir des granulés ; et
étape (4), frittage des granulés obtenus à l'étape (3) pour obtenir un cœur ayant la formule chimique Li_{z}AₓMn_{1-y}B_{y}P₁₋₇C_{z}O₄₋ₙDₙ.

12. Procédé selon la revendication 11, dans lequel
la source d'élément A est au moins une source choisie parmi la substance élémentaire, les oxydes, les phosphates, les oxalates, les carbonates et les sulfates de l'élément A, la source d'élément B est au moins une source choisie parmi la substance élémentaire, les oxydes, les phosphates, les oxalates, les carbonates et les sulfates de l'élément B, la source d'élément C est au moins une source choisie parmi les sulfates, les borates, les nitrates et les silicates de l'élément C, et la source d'élément D est au moins une source choisie parmi la substance élémentaire et les sels d'ammonium de l'élément D ;
et/ou
dans lequel
l'agitation à l'étape (1) est réalisée à une température dans une plage de 60-120 °C, et/ou l'agitation à l'étape (1) est réalisée par agitation à une vitesse de 200-800 tr/min, et/ou le broyage et le mélange à l'étape (2) sont réalisés pendant 8-15 heures, et/ou le frittage à l'étape (4) est réalisé à une température dans une plage de 600-900 °C pendant 6-14 heures.

13. Procédé selon l'une quelconque des revendications 10 à 12, dans lequel la poudre de MP₂O₇ est préparée par les étapes suivantes : ajout d'une source de M élémentaire et d'une source de phosphore à un solvant pour obtenir un mélange, ajustement du pH du mélange à 4-6, agitation et réaction dans des proportions suffisantes, puis séchage et frittage, dans lequel M représente un ou plusieurs éléments choisis parmi Li, Fe, Ni, Mg, Co, Cu, Zn, Ti, Ag, Zr, Nb et Al ;
de préférence,
dans lequel
le séchage est réalisé à 100 °C à 300 °C, éventuellement à 150 °C à 200 °C pendant 4 à 8 heures ; et/ou
le frittage est réalisé à 500 °C à 800 °C, éventuellement à 650 °C à 800 °C sous une atmosphère inerte pendant 4 à 10 heures ; et/ou
le frittage à l'étape de revêtement est réalisé à 500 °C à 800 °C pendant 4 à 10 heures.

14. Plaque d'électrode positive comprenant un collecteur de courant d'électrode positive et une couche de film d'électrode positive disposée sur au moins une surface du collecteur de courant d'électrode positive, dans laquelle la couche de film d'électrode positive comprend le matériau actif d'électrode positive selon l'une quelconque des revendications 1 à 9 ou le matériau actif d'électrode positive préparé par le procédé selon l'une quelconque des revendications 10 à 13, et le matériau actif d'électrode positive est présent dans la couche de film d'électrode positive à une teneur de 10 % en poids ou plus, éventuellement de 90 % en poids à 99,5 % en poids, rapporté au poids total de la couche de film d'électrode positive.

15. Batterie rechargeable (5) comprenant le matériau actif d'électrode positive selon l'une quelconque des revendications 1 à 9, ou le matériau actif d'électrode positive préparé par le procédé selon l'une quelconque des revendications 10 à 13, ou la plaque d'électrode positive selon la revendication 14.
